# EUROPEAN PATENT APPLICATION

(11) **EP 1 443 439 A1**
(43) Date of publication of application: **04.08.2004**
(21) Application number: 02779928.7
(22) Date of filing: 29.10.2002
(51) Int. Cl.: G06F 17/60

(54) **CONTENT INFORMATION TRANSFERRING DEVICE AND CONTENT INFORMATION RECEIVING DEVICE**

(30) Priority: 31.10.2001 JP 2001333733
(71) Applicant: MATSUSHITA ELECTRIC INDUSTRIAL CO., LTD., Kadoma-shi, Osaka 571-8501 (JP)
(72) Inventor: SUGIURA, Masataka, Setagaya-ku, Tokyo 158-0082 (JP)
(74) Representative: Betten & Resch
(86) International application number: PCT/JP2002/011216
(87) International publication number: WO 2003/038704

(57) **Abstract**

Content information can be transmitted without infringing the rights of the copyright holder. A content information transferring apparatus comprises a content information storage section for storing content information, a rights information storage section for storing rights information regarding restriction of transfer of content information, a transfer processing section for generating transfer processing information regarding transfer of content information based on the rights information stored in the rights information storage section, and a transmitting section for transmitting content information stored in the content information storage section based on transfer processing information generated by the transfer processing section.

## Description

### BACKGROUND OF THE INVENTION

### Field of the invention

The present invention relates to an apparatus for transferring and receiving of content information, and to a program therefor.

### Description of the Related Art

Heretofore, although content information, which has been purchased, is transferred for free, it is not transferred in return for remuneration. Because the content information is expressed as digital information and easily copied, so that user feels that it is difficult to get paid for the transfer of the content information.

Moreover, although the copyright holder of a content information considers selling the content information in return for consideration but not consider selling the content, which the copyright holder has purchased, to the other user. The legal rules or regulations for the above case are not formulated, thereby causing a problem.

Although technologies of the protection of the rights for distributing content information are developed so that the copyright may not obstruct the distribution, most of these technologies are inconvenient for the users, so that the technologies do not become widespread.

### SUMMARY OF THE INVENTION

It is an objective of the present invention to provide an apparatus and a program, wherein content information, which is received by a user, is transferred to another user for value so that the transfer may not be an infringement of the underlying copyright, and content information, which is received by the other user, is received, in exchange for value so that the reception is not an infringement of the underlying copyright.

In order to resolve the above deficiency, firstly, the information regarding the associated rights including any restrictions on the transfer of the content information is stored, the information for transfer of the content information is generated based on the information regarding the associated rights which has been stored, and the content information transferring apparatus, transmitting the content information based on the information which has been generated, is provided. Moreover, the content information transferring apparatus, wherein the information indicating any restrictions on transfer of the content information is stored, the information for transfer of the content information is generated based on the information regarding the associated rights which has been stored, and the content information is received based on the information which has been generated, is provided.

According to the present invention, the copyright holder defines the information regarding transferring and receiving and distributes it in relationship to the content information as the rights for use of the content information, thereby implementing transferring and receiving in compliance with copyright holder's wishes.

Secondly, the section negotiating conditions regarding transferring and receiving of the content information is prepared in the content information assigning apparatus and the content information receiving apparatus.

Thereby, for example, it becomes possible for transferor side of the content information to transfer the content information at the highest cost expected, and for transferee side of the content information to receive the content information at the lowest cost expected, so that it is expected that a market of transferring and receiving of the content information will be established.

Thirdly, the content information transferring apparatus generating and transmitting the transferring result and content information receiving apparatus generating and transmitting the acceptance result are provided.

Thereby it becomes possible to collect the copyright royalty in conjunction with the transfer and reception of the content information.

Fourthly, the content information transferring apparatus generating and transmitting the transfer schedule and the content information receiving apparatus generating and transmitting the acceptance schedule are provided.

Thereby it becomes possible for third party to check details of the transfer schedule and the acceptance schedule, so that it becomes possible to prevent transfer and reception of the content information at an unreasonably low price.

Fifthly, the content information transferring apparatus, receiving information regarding transfer approval which is returned based on the transfer schedule of the content information which has been transmitted and generating information for the transfer of the content information based on the information, is provided. Moreover, the content information receiving apparatus, receiving information regarding acceptance approval which is returned based on the acceptance schedule of the content information which has been transmitted, and generating information for reception of the content information based on the information, is provided.

Thereby it becomes possible to control transfer and reception of the content information.

Sixthly, the content information transferring apparatus and the content information receiving apparatus, executing restrictions according to the consideration information by including the consideration information determining upper limit and/or lower limit of the consideration of the content information into the information regarding the associated rights, are provided.

Therefore, it becomes possible to determine the consideration of the content information of the same sort by knowing how much consideration has been required for the transfer and reception. Moreover, by determining the upper limit, excessive prices, which may be an antitrust violation, are prevented, and by determining the lower limit, it becomes able to guarantee the right of copyright holder (e.g. setting the lowest price etc.).

### BRIEF DESCRIPTION OF THE DRAWINGS

Fig. 1 is a functional block diagram of the content information transferring apparatus of the first embodiment of the present invention,
Fig. 2 is an illustration of a structure of the content information stored by the content information transferring apparatus,
Fig. 3 is an illustration of a structure of the information regarding the associated rights stored by the content information transferring apparatus,
Fig. 4 is an illustration of a structure of the transfer processing information,
Fig. 5 is a flowchart demonstrating an operation of the content information transferring apparatus,
Fig. 6 is a functional block diagram of the content information receiving apparatus of the first embodiment of the present invention,
Fig. 7 is an illustration of a structure of the information regarding associated rights stored by the content information receiving apparatus,
Fig. 8 is an illustration of a structure of the acceptance processing information,
Fig. 9 is a flowchart demonstrating an operation of the content information transferring apparatus,
Fig. 10 is an illustration of a communication between the content, information transferring apparatus and the content information receiving apparatus,
Fig. 11 is a functional block diagram of an apparatus having functions of the content information transferring apparatus and the content information receiving apparatus,
Fig. 12 is a functional block diagram of the content information transferring apparatus of the third embodiment of the present invention,
Fig. 13 is a functional block diagram of the content information receiving apparatus of the third embodiment of the present invention,
Fig. 14 is a functional block diagram of the content information transferring apparatus of the fourth embodiment of the present invention,
Fig. 15 is a functional block diagram of the content information receiving apparatus of the fourth embodiment of the present invention,
Fig. 16 is a functional block diagram of the content information transferring apparatus of the fifth embodiment of the present invention,
Fig. 17 is a functional block diagram of the content information receiving apparatus of the fifth embodiment of the present invention,
Fig. 18 is a functional block diagram of the content information transferring apparatus of the sixth embodiment of the present invention,
Fig. 19 is a functional block diagram of the content information receiving apparatus of the sixth embodiment of the present invention,
Fig. 20 is a functional block diagram of the content information transferring apparatus of the second embodiment of the present invention,
Fig. 21 is a flowchart demonstrating the operation of the content information transferring apparatus of the second embodiment of the present invention,
Fig. 22 is a functional block diagram of the content information receiving apparatus of the second embodiment of the present invention,

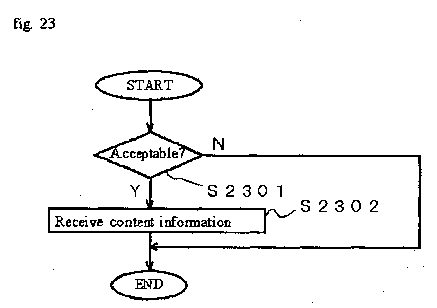

Fig. 23 is a flowchart demonstrating the operation of the content information receiving apparatus of the second embodiment of the present invention,
Fig. 24 is a functional block diagram of the content information transferring apparatus wherein the transfer processing section comprises the transfer schedule information generating means,
Fig. 25 is a flowchart demonstrating an operation of the content information transferring apparatus, the functional block diagram of which is illustrated in Fig. 24,
Fig. 26 is a sequential view of a process among the content information transferring apparatus, the content information transferring apparatus and the transfer approving apparatus,
Fig. 27 is a functional block diagram of the content information transferring apparatus implementing the process of Fig. 26,
Fig. 28 is a flowchart demonstrating an operation of the content information transferring apparatus, the functional block diagram of which is illustrated in Fig. 27,
Fig. 29 is a functional block diagram of the content information receiving apparatus wherein the acceptance processing section comprises the acceptance schedule information generating means,
Fig. 30 is a flowchart demonstrating an operation of the content information receiving apparatus, the functional block diagram of which is illustrated in Fig. 29,
Fig. 31 is a sequential view of a process among the content information transferring apparatus, the content information receiving apparatus and the .transfer approving apparatus,
Fig. 32 is a functional block diagram of the content information receiving apparatus implementing the process of Fig. 31,
Fig. 33 is a flowchart demonstrating an operation of the content information receiving apparatus, the functional block diagram of which is illustrated in Fig. 32.

### DETAILED DESCRIPTION OF THE PREFERRED EMBODIMENT

Hereinafter, the embodiments of the present invention will be described with the use of drawings. The present invention is not limited to these embodiments and may be embodied in various forms without departing the scope of the present invention.

In the present embodiment, the content information transferring apparatus 100 comprises the content information storage section 101, the rights information storage section 102, the transfer processing section 103, and the transmitting section 104.

The content information storage section 101 stores the content information 105. Here, the content information may be comprised of the content 201, and the usage-condition information 202 etc. The content 201 corresponds to objects to be played back such as music, still pictures, movies, text etc. Moreover, the usage-condition information 202 corresponds to information determining condition related to availability of content such as an encryption key for playback, date in which playback becomes available, period available for playback, and IP address, host server name, domain name, port number, URL, and mail address etc. of the web site.

The content information may comprise the content 201 or the usage-condition information 202 or both of them. The content information 105 can be transferred by being transmitted. Hereinafter, transfer of the content information 105 corresponds to transmission thereof.

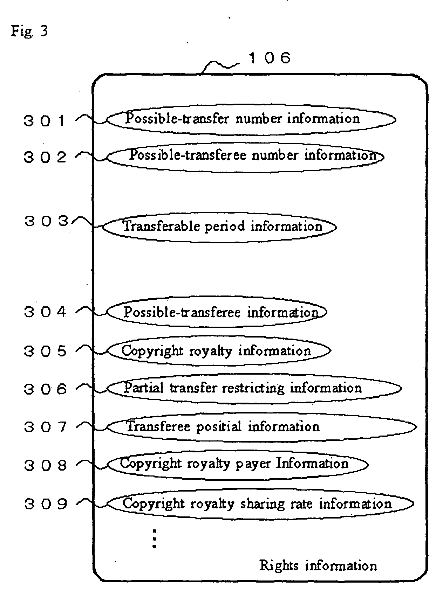

The rights information storage section 102 stores the rights information 106. The rights information 106 determines any restrictions to transfer of the content information 105. Therefore, the condition, to be fulfilled when the content information 105 is transferred, is determined. Here, although the "content information 105" has been described, the content information is not limited to the one specific content information and plurality of the content information in a specific field may be permitted. Examples of the fields include a music played by a specific musician and music composed by a specific composer etc. Fig. 3 shows a structure of the rights information 106 stored by the rights information storage section 102 of the content information transferring apparatus 100. In this Fig. 3, the rights information 106 comprises the possible-transfer number information 301, the possible-transferee number information 302, the transferable period information 303, the possible-transferee information 304, the copyright royalty information 305, the partial transfer restricting information 306, the transferee positional information 307, the copyright royalty payer information 308, the copyright royalty sharing rate information 309. Moreover, the rights information 106 may comprise a portion of the above information.

The possible-transfer number information 301 corresponds to information determining the number of possible-transfer of the content information 105. Here, "transfer number" indicates the number of transmissions of the content information 105. For example, the number indicated in the possible-transfer number information 301 is decreased by one with each transmission of the content information, and in cases where the number becomes 0, the content information 105 becomes untransferable. Alternatively, the counter may increase by one at every transfer of the content information 105, and when the counter indicates the same value of the possible-transfer number information 301, the content information 105 becomes untransferable.

The possible-transferee number information 302 is information determining the number of people who can become the possessor of or receive the content information 105, and controls copying of the content information 105. Therefore, even if the same content information is transferred from the content information transferring apparatus to the apparatus, the possessor of which is the same person; the transfer is not restricted by the possible-transferee number information 302, whereas there is the case that it can be restricted by the possible-transfer number information 301. Moreover, in cases where the possible-transfer number is 1, the content information transferring apparatus 100 has to delete the content information 105 thereof at the transfer of the content information 105, thereby making the transfer and copying of the content information 105 impossible.

The transferable period information 303 corresponds to information of determining the transferable period of the content information 105. Therefore, it is the information indicating from when it becomes transferable, and until when it is transferable.

The possible-transferee information 304 corresponds to information determining possible-transferee of the content information 105. Therefore, examples of the information, specifying destination the content information is transmitted, including IP address, host server's name, domain's name, URL, mail address, mobile phone number, fax number etc. Moreover, examples of the information include name, gender, and age etc. of the transferee or the owner of the apparatus to which the content information is transmitted.

The copyright royalty information 305 corresponds to copyright royalty to be paid for the transfer of the content information 105. Examples of the information include how much it costs, payment method, and payment recipient etc. Examples of ways of determining the copyright royalty may include a predetermined amount or rate in proportion to the price of the transfer.

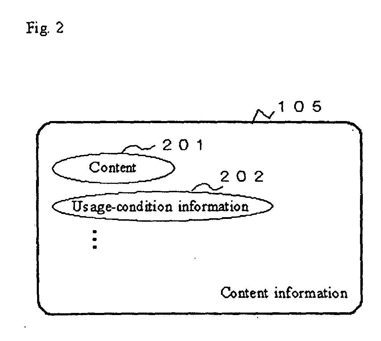

The partial transfer restricting information 306 corresponds to information determining any restriction on partial transfer of the content information 105. For example, in cases where the content information is comprised of content and usage-condition information as shown in Fig. 2, the information indicates whether only the usage-condition information can be transferred. Moreover, the information may indicate whether a part of content can be transferred, in cases where content is divided into some parts. For example, it may indicate whether each chapter can be transferred, in cases where the content is a text of a novel.

The transferee positional information 307 corresponds to the information for restriction of the content information receiving apparatus, to which the content information 105 is transmitted, by the position thereof. "Restriction by position" corresponds to the restriction of the content information receiving apparatus, to which the content information is transferred, by physical position thereof. For example, the information indicates that the content is transferable in one specific area, but is not transferable to the content information receiving apparatuses located in the other areas.

The copyright royalty payer information 308 corresponds to information determining payer of the copyright royalty to be paid based on the transfer of the content information 105. For example, the information indicates whether the transferor or the transferee pays the royalty. Moreover, a third party may be determined to be the payer.

The copyright royalty sharing rate information 309 corresponds to the information determining the sharing rate among the payers of the copyright royalty to be paid based on the transfer of the content information 105. It indicates the payment proportion of the copyright royalty between the transferor and the transferee in cases where the copyright royalty is paid by both of the transferor and the acceptor. Moreover, in cases where a third party paying the copyright royalty exists, the information indicates the payment proportion to be shared by that party.

Moreover, except the above examples, the rights information 106 may include the consideration information determining the upper and/or lower limit of the consideration for transfer of the content information 105, and the possible-resale number information determining the number of possible-resales of the content information. The "possible-resale number information" corresponds to the information determining the number of possible-resales of the content information. "Resale" means that a transferee of the content information further transfers it. In cases where the number of possible-resales is 2, transfer from A to B and the transfer from B to C are possible whereas the transfer from C to D is impossible because the total number of the transfers from A to D is 3.

Moreover, the information indicating whether or not transfer of the content information 105 is permitted, the information indicating whether the content information 105 is to be deleted or the rights information 106 is to be deleted at the point of transmitting the content information 105, the information distinguishing the apparatus to which the content information is not permitted to be transmitted, and the information regarding transmission of the content information 105 such as URL of a complaint window, e-mail address, telephone number, mobile phone number, fax number etc. may be included.

The rights information 1'06 can be expressed by using, for example, XML and stored in the rights information storage section 102. In this case, for example, the portion surrounded by <possible-transfer number> and </possible-transfer number> corresponds to the possible-transfer number information.

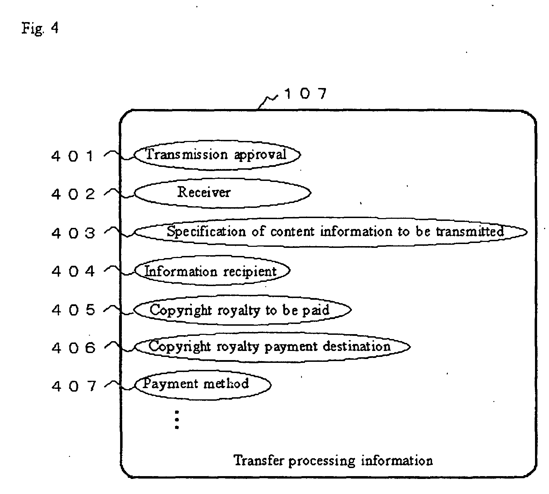

The transfer processing section 103 generates the transfer processing information 107 based on the rights information 106 stored in the rights information storage section 102. The transfer processing information 107 is the information for transfer of the content information, and is passed to the transmitting section 104 described hereinafter. Fig. 4 is an illustration of the transfer processing information 107 including the transmission approval 401, the transmission destination 402, the specification of content information to be transmitted 403, the information recipient 404, the copyright royalty to be paid 405, the copyright royalty, copyright royalty payee 406, and the payment method 407. The transmission approval 401 is information indicating whether or not the transmitting section 104 can transmit content information. For example, in cases where transmission is prohibited by the rights information 106, it indicates that transmission is impossible. The transmission destination 402 corresponds to transmission destination of the content information such as IP address, host name, domain name, port number, URL, mail address, telephone number, mobile phone number, and fax number etc. The specification of the content information to be transmitted 403 specifies the content information to be transmitted which is stored in the content information storage section 101. The information recipient 404 is information indicating the recipient of the information regarding the fact that the content information has been transmitted or the fact that the content information is to be transmitted, and expressed by IP address, host name, domain name, port number, URL, mail address, telephone number, mobile phone number, and fax number etc. The copyright royalty to be paid 405 is information indicating the copyright royalty to be paid as consideration for transfer of content information. The copyright royalty payment destination 406 is information indicating a payment destination of the copyright royalty to be paid as consideration for transfer of content information. The payment method 407 is information regarding payment method of the copyright royalty, and indicating settlement by using credit card, bank transfer, and carrying method etc. , and including information regarding which credit card can be used, account number, and payment on account etc.

The transfer processing information 107 may be expressed by using XML, by using list format of LISP. For example, it is supposed to be expressed as (transfer processing information (transmission approval t) (transmission destination "http://cgi. ab. co. jp/yuzuriuke. cgi") (content information "Tale of Genji Murasaki no Yukari")). Here, the symbol "transfer processing information" indicates initiation of the transfer processing information, and "(transmission approval t)" indicates that transmission is possible. Moreover, the transfer processing information 107 may be expressed by structure used in C language or a variation of the class such as C++ language.

The transmitting section 104 transmits the content information stored in the content information storage section 101 based on the transfer processing information 107 generated by the transfer processing section 103. For example, in cases where the transfer processing information expressed by a list, (transfer processing information(transmission approval t) (transmission destination "http://cgi.ab.co.jp/yuzuriuke.cgi") (content information "Tale of Genji Murasaki no yukari")) is passed from the transfer processing section 103 to the transmitting section 104, since "transmission approval" is "t", which means "transmittable", the content information "Tale of Genji Murasaki no yukari" is acquired from the content information storage section 101, and is transmitted to the transmission destination "http://cgi.ab.co.jp/yuzuriuke.cgi".

The transmission of the content information 108 by the transmitting section 104 may be performed via an open network such as the internet or wireless communication etc., or local communication path between apparatuses such as a serial communication, infra-red communication, Bluetooth, and radio transceiver or other similar methods.

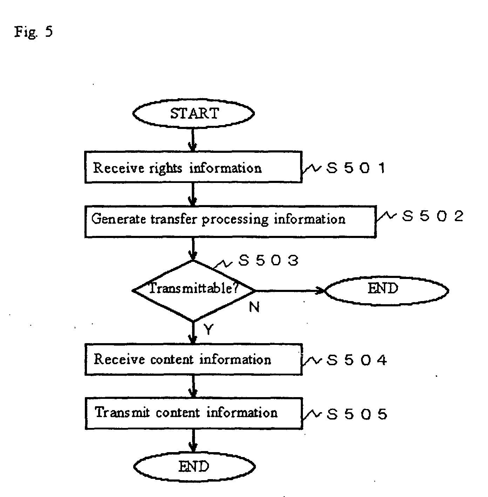

Fig. 5 is a flow chart demonstrating the operation of the content information transferring apparatus 100. In step S501, the rights information 106 is received from the rights information storage section 102.

In step S502, the transfer processing information 107 is generated in the transfer processing section 103 based on the rights information 106. This transfer processing information 107, which has been generated, is passed to the transmitting section 104.

In step S503, the transmitting section 104 determines whether or not the content information is transmittable. If not, it terminates processing.

If the content information is transmittable, the process proceeds to step S504, and the content information 105 to be transmitted is received from the content information storage section 101.

In step S505, the content information 105 received in step S504 is transmitted as the content information 108.

According to the content information transferring apparatus 100 having the structure as described above, transfer by transmission of the content information based on the rights information 106 becomes possible. Moreover, the copyright holder specifies the right information 106, thereby enabling transfer to correspond to the copyright holder's intent.

Note that the content information transferring apparatus 100 can be implemented by computer. Therefore, by using a program that causes the computer to execute the content information storage step, the right information storage step, the transfer processing step, and the transmitting step; the content information transferring apparatus 100 can be implemented by a computer.

The content information storage step is a step of storing content information. "Storing" means, for example, storing content information into a hard disk device or non-volatile memory, and preparing it so that the content information may be read as necessary.

The rights information storage step is a step of storing rights information. For example, it is a step of storing content information into a hard disk device or non-volatile memory, and preparing it so that the content information may be read as necessary.

The transfer processing step is a step of generating transfer processing information based on the rights information stored in the rights information storage step, in which said information is used for transfer of content information.

The transmitting step is a step of transmitting content information based on the transfer processing information generated in the transfer processing step.

Although the above program, rights information, and content information are stored in a computer, it is preferable that they are stored in a tamper-resistant storage area because they relate transfer of content information which is intangible property. Moreover, in cases where content information is encrypted, it is possible that only the decryption key is stored in tamper-resistant area and the encrypted content information itself is stored in a flash-memory area in which access is not restricted. "Tamper-resistant" means that illicit access is difficult. Examples of tamper-resistant storage areas include an IC card deleting content stored in memory wherein light, oxygen, or transmission of signal in improper order is detected.

Moreover, the transmitting section 104 may transmit the rights information 106 determining restriction of transfer of content information to be transmitted. Therefore, the transmitting section 104 may receive the rights information 106 from the rights information storage section 102 directly or via the transfer processing section 103, and may transmit it. In cases where the rights information 106 is received via the transfer processing section 103, the right information may be contained in the transfer processing information 107. In this case, the rights information 106 may be transmitted before or after the transmission of the content information 108. By the transmission of the rights information 106, the apparatus receiving the rights information 106 becomes able to transfer content information to the other apparatus.

Note that in cases where the transmitting section 104 transmits the rights information 106, the possible-resale number information may be included. When the possible-resale number information is included in the rights information 106 as in the above case, the possible-resale number is decreased by 1 before the transmission of the rights information 106 or the reception-side of the rights information 106 stores it in conjunction with decreasing the possible-resale number by 1. Moreover, the transfer processing section 103 confirms the possible-resale number included in the rights information 106 and generates the transfer processing information 107. In cases where the possible-resale number is less than 0, the transmission approval 401 becomes unapproved. Moreover, the right information 106 may include the total transfer number information determining the total number of transfers of the content information 105. "Total number of transfers" corresponds to the total number of transfers and resales of the content information 105, and the "total transfer number information" determines the upper-limit of the total number of transfers and resales. In order to make the restriction by the total transfer number information effective, a tertiary apparatus counting the number of transfers of the content information 105 may be prepared. In the transmission of the content information 105 by the content information transferring apparatus 100, the number of transfers of the content information 105 to the tertiary apparatus is required, and it is confirmed that the number of transfers is less than the total transfer number, after that the content information 105 is transmitted. Moreover, the content information transferring apparatus 100 informs the transmission of the content information 105 to the tertiary apparatus, and the tertiary apparatus receiving the information increases the number of transfers of the content information 105 by 1. As described above, by including the possible-transfer number information, possible-resale number information, and the total transfer number information in the rights information 106, it becomes possible to control various conditions of transfers of the content information 105. Therefore, in cases where the content information 105 is transferred, a directed graph, in which the transferor and the transferee are set to be nodes, and an arrow from the transferor to the transferee is written, is established. In this directed graph, the possible-transfer number information corresponds to restriction of arrows from one node, the possible-resale number information corresponds to restriction of path length, and the total transfer number information corresponds to restriction of number of nodes in a directed graph.

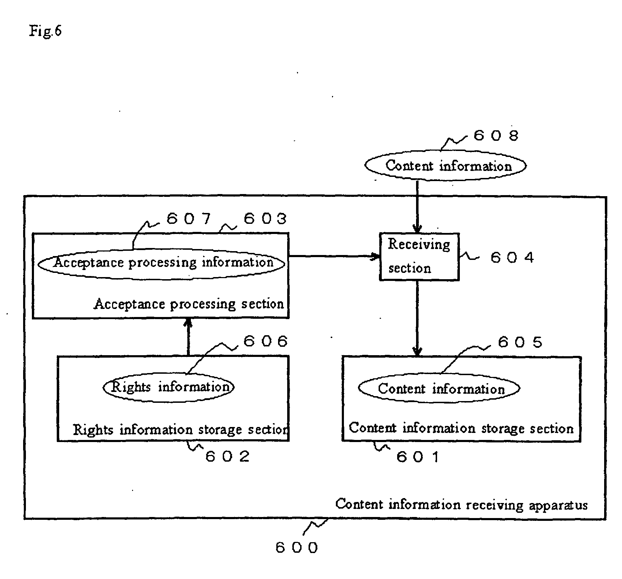

Fig. 6 is a functional block diagram of the content information receiving apparatus related to the first embodiment of the present invention. In the present embodiment, the content information receiving apparatus 600 comprises the content information storage section 601, the rights information storage section 602, the acceptance processing section 603, and the transmitting section 604.

The content information storage section 601 stores the content information 605. Here, as shown in Fig. 2, the content information may be comprised of the content 201, and the usage-condition information 202 etc. The content 201 corresponds to objects to be played back such as music, still pictures, movies, text etc. Moreover, the usage-condition information 202 corresponds to information determining the condition related to the usage of content such as an encryption key for playback, date at which playback becomes available, period in which playback is available, and IP address, host name, domain name, port number, and URL etc. of the web site to which the playback is informed at the point of playback. The content information may comprise both of the content 201 and the usage-condition information 202 or either one of them. The content information 605 can be accepted by being received.

The rights information storage section 602 stores the right information 606. The rights information 606 determines restriction to reception of the content information 105. Therefore, the condition, to be fulfilled when the content information 605 is received, is determined.

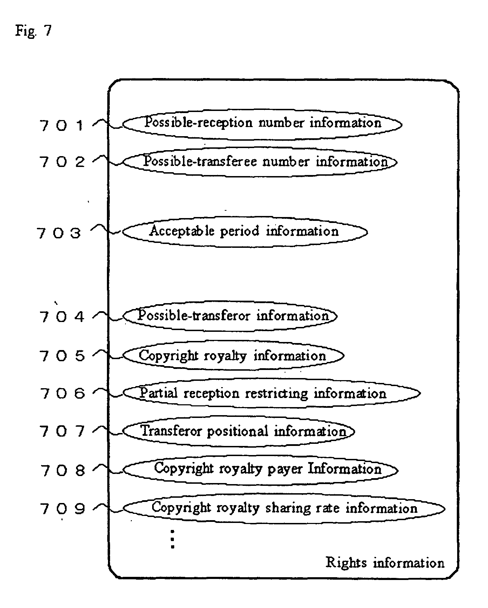

Examples of the fields include music played by a specific musician and music composed by a specific composer etc. Fig. 7 shows a structure of the rights information 606 stored by the rights information storage section 602 of the content information receiving apparatus 600. In this drawing, the rights information 606 comprises the possible-reception number information 701, the possible-transferee number information 702, the acceptable period information 703, the possible-transferor information 704, the copyright royalty information 705, the partial reception restriction information 706, the transferor positional information 707, the copyright royalty payer information 708, and the copyright royalty sharing rate information 709. Moreover, the rights information 606 may comprise a part of the above information.

The possible-reception number information 701 corresponds to information determining the number of possible receptions of the content information 605. Here, "reception number" indicates the number of receptions of the content information 105. For example, the number indicated in the possible-reception number information 701 is decreased by 1 after each reception of the content information. In cases where the number becomes 0, the content information becomes untransferable. Alternatively, there may be a counter increases by 1 at every reception of the content information 605, and when the counter value is equal to the possible-reception number information 701, the content information 605 becomes untransferable.

The possible-transferee number information 702 corresponds to the information determining the number of people who can become a transferee or possessor of the content information 605, and controls copying of the content information 605. Therefore, even if the same content information is received several times by the content information receiving apparatus, the possessor of which is the same person; the reception is not restricted by the possible-transferee number information 702, whereas there is the case that it can be restricted by the possible-reception number information 701. Moreover, by setting the possible-transferee number to 1, the reception of a copy of the content information 605 becomes prohibited.

The acceptable period information 703 corresponds to information determining an acceptable period of the content information 605. Therefore, it is the information indicating from when it becomes acceptable, and how long it remains acceptable.

The possible-transferor information 704 corresponds to information determining possible-transferor of the content information 605. Therefore, examples of the information, specifying the destination of the content information is transmitted, include an IP address, host server's name, domain's name, a URL, a mail address, a mobile phone number, a fax number etc. Moreover, examples of the information include name of the owner or the owner of the apparatus which transmits the content information.

The copyright royalty information 705 corresponds to the copyright royalty to be paid based on the reception of the content information 605. Examples of the information include cost, payment method, and payment recipient etc. Examples of ways of determining the copyright royalty may include a predetermined amount or rate in proportion to the price of reception.

The partial reception restriction information 706 corresponds to information determining restriction of partial reception of the content information 605. For example, the information indicating whether or not the content and the content usage-condition information can be separated and whether only the usage-condition information can be received, in cases where the content information is comprised of content and usage-condition information as shown in Fig. 2. Moreover, the information may indicate whether or not a portion of content can be received, in cases where content is divided into some parts. For example, it may indicate whether each chapter can be received, in cases where the content is a text of a novel.

The transferor positional information 707 corresponds to the information restricting the content information receiving apparatus, to which the content information 605 is transmitted, by the position thereof. "Restricting by position"corresponds to restricting the content information receiving apparatus, to which the content information is received, by physical position thereof. For example, the information indicating that the content is receivable in a certain area, but is not receivable to the content information receiving apparatuses located in other areas.

The copyright royalty payer information 708 corresponds to information determining payer of the copyright royalty to be paid based on the reception of the content information 605. For example, the information indicates whether the transferor or the transferee pays the royalty. Moreover, the third party may be determined to be a payer.

The copyright royalty sharing rate information 709 corresponds to the information determining the sharing rate among the payers of the copyright royalty to be paid based on the reception of the content information 605. It indicates the payment proportion of the copyright royalty between the transferor and the transferee in cases where the copyright royalty is paid by both of the transferor and the transferee. Moreover, in cases where a third party paying the copyright royalty exists, the information indicates the payment proportion to be shared by that party.

Moreover, except in the above examples, the rights information 606 may include the consideration information determining the upper and/or lower limit of the consideration for reception of the content information 605, and the possible-resale number information determining the number of possible-resales of the content information. The "possible-resale number information" corresponds to the information determining the number of possible-resales of the content information. "Resale" means that a transferee of the content information further transfer the content information for another person. In cases where number of possible-resale is 2, reception from A to B and the reception from B to C are possible whereas the reception from C to D is impossible because the total number of the receptions from A to D is 3.

Moreover, the rights information 606 may include information specifying the transmitter (e. g. IP address, port number, domain name, host name, URL, mail address, telephone number, mobile phone number, and fax number etc.), reception of content therefrom is prohibited, information of complaints about transfer of content information such as URL, mail address, telephone number, mobile phone number, and fax number etc., or signature of a third party indicating authenticity of the rights information 606.

The rights information 606 can be expressed by using, for example, XML and stored in the rights information storage section 602. In this case, for example, the portion surrounded by <possible-reception number> and </possible-reception number> corresponds to the possible-reception number information.

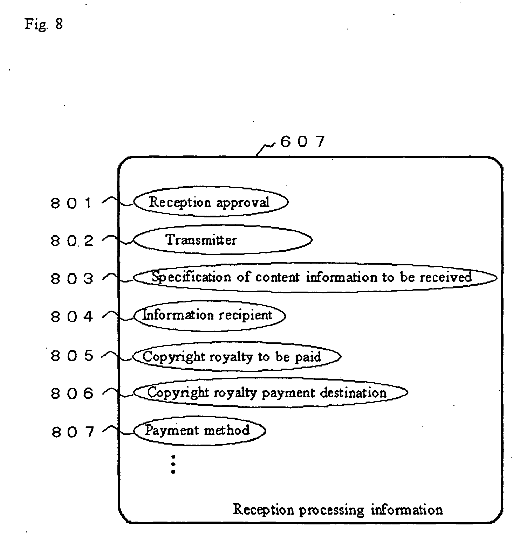

The acceptance processing section 603 generates the acceptance processing information 607 based on the rights information 606 stored in the rights information storage section 602. The acceptance processing information 607 is the information for reception of the content information, and is passed to the receiving section 604 described hereinafter. Fig. 8 is an illustration of the acceptance processing information 607 including the acceptance approval 801, the transmitter 802, the specification of content information to be received 803, the information recipient 804, the copyright royalty to be paid 805, the copyright royalty payment destination 806, and the payment method 807. The acceptance approval 801 is information indicating whether or not the receiving section 604 can receive content information. For example, in cases where reception is prohibited by the rights information 606, it indicates that reception is prohibited. The transmitter 802 corresponds to information regarding transmitter of the content information such as IP address, host name, domain name, port number, URL, mail address, telephone number, mobile phone number, and fax number etc. The specification of the content information to be transmitted 803 specifies the content information to be received. The information recipient 804 is information indicating the recipient of the information regarding the fact that the content information has been transmitted or the fact that the content information is to be transmitted, and expressed by IP address, host name, domain name, port number, URL, mail address, telephone number, mobile phone number, and fax number etc. The copyright royalty to be paid 805 is information indicating the copyright royalty to be paid for reception of content information. The payment method 807 is information regarding payment method of the copyright royalty, and indicating settlement by using credit card, bank transfer, and accounts etc., and including information regarding which credit card can be used, account number, and carrying destination etc.

The acceptance processing information 607 may be expressed by using XML, or by using list format of LISP as with the rights information 606. For example, it is supposed to be expressed as (acceptance processing information (acceptance approval t)(transmitter "http://cgi. ab. co. jp/yuzuriuke. cgi") (content information "Tale of Genji Murasaki no Yukari")). Moreover, the acceptance processing information 607 may be expressed by structure used in C language or a variation of the class such as C++ language.

The receiving section 604 receives the content information 608 based on the acceptance processing information 607 generated by the acceptance processing section 603. The content information 608, which has been received, is stored in the content information storage section 601.

The reception of the content information 608 by the receiving section 604 may be performed via open network such as the internet and wireless communication etc., or local communication path between apparatuses such as serial communication, infra-red communication, Bluetooth, and radio transceiver or similar methods.

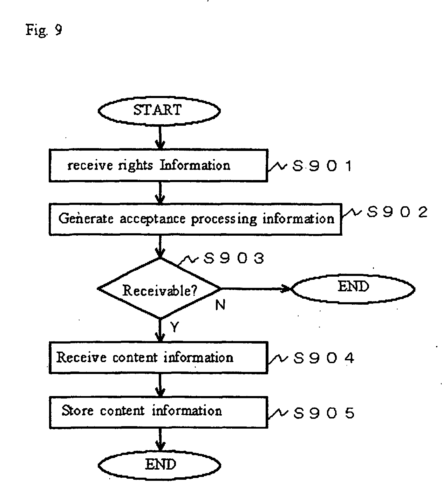

Fig. 9 is a flow chart demonstrating an operation of the content information receiving apparatus. In step S901, the rights information 606 is received from the rights information storage section 602. Note that the rights information 606 is stored in the rights information storage section 602 in advance of the operation demonstrated by the flow chart of Fig. 9. For example, the rights information 106 is transmitted from the content information transferring apparatus 100, and stored in the rights information storage section 602 as the rights information 606.

In step S902, the acceptance processing information 607 is generated in the acceptance processing section 603 based on the rights information 606. This acceptance processing information 107, which has been generated, is passed to the receiving section 604.

In step S903, the receiving section 604 determines whether or not the content information is transmittable based on the acceptance processing information 607 generated by the acceptance processing section 603. If not, it terminates the processing.

If the content information is receivable, the process proceeds to step S904, and the content information 608 is received by the receiving section 604.

In step S905, the content information 608, received in step S904, is stored into the content information storage section 601.

According to the content information receiving apparatus 600 having the structure as described above, reception of the content information based on the rights information 606 becomes possible. Moreover, the copyright holder specifies the rights information 606, thereby enabling reception corresponding to the copyright holder's intent.

Note that the content information receiving apparatus 600 can be implemented by a computer. Therefore, by using a program causing the computer to execute the content information storage step, the rights information storage step, the acceptance processing step, and the receiving step; the content information receiving apparatus 600 can be implemented by a computer.

The content information storage step is a step of storing content information. "Storing" means that, for example, storing content information into a hard disk device or non-volatile memory for a certain period of time, and preparing so that the content information may be read as necessary.

The rights information storage step is a step of storing rights information.

The transfer processing step is a step of generating acceptance processing information based on the rights information stored in the rights information storage step, in which said information is used for reception of content information.

The receiving step is a step of receiving content information based on the acceptance processing information generated in the acceptance processing step.

Although the above program, rights information, and content information are stored in a computer, it is preferable that they are stored in a tamper-resistant storage area because they relate reception of content information which is intangible property. Moreover, in cases where content information is encrypted, it is possible that only the decryption key is stored in a tamper-resistant area and the encrypted content information itself is stored in a flash-memory area unrestricted access. "Tamper-resistant" means that illicit access is difficult. Examples of tamper-resistant storage area include an IC card deleting content stored in memory when light, oxygen, or reception of signal in improper order is detected.

Moreover, the receiving section 604 may transmit the rights information determining restriction of reception of content information to be transmitted. The rights information 606, which has been received, is passed from the receiving section 604 to the rights information storage section 602, and stored. After that, it is read by the acceptance processing section 603 for acceptance processing for receiving content information.

Note that in cases where the receiving section 604 receives the rights information, the possible-resale number information may be included. When the possible-resale number information is included in the rights information as the above case, the possible-resale number is decreased by 1 before the reception of the rights information or the reception-side of the rights information stores it in conjunction with decreasing the possible-resale number by 1. Moreover, the acceptance processing section 603 confirms the possible-resale number included in the rights information 606 and generates the acceptance processing information 607. In cases where the possible-resale number is less than 0, the acceptance approval 801 is claimed. Moreover, the rights information 606 may include the total reception number information determining the total number of receptions of the content information 605. "Total number of receptions" corresponds to the total number of receptions and resales of the content information 605, and the "total reception number information" determines an upper-limit of the total number of receptions and resales. In order to make the restriction by the total reception number information effective, a tertiary apparatus counting the number of receptions of the content information 605 may be provided. In the reception of the content information 605 by the content information receiving apparatus, the reception number of the content information 605 to the tertiary apparatus is required, and it is confirmed that the number of receptions is less than the total reception number, after that the content information 605 is transmitted. Moreover, the content information receiving apparatus informs the transmission of the content information 605 to the tertiary apparatus, and the tertiary apparatus receiving the information increases the number of reception of the content information 605 by 1. As described above, by including the possible-reception number information, possible-resale number information, and the total reception number information in the rights information 606, it becomes possible to control various conditions of receptions of the content information 605. Therefore, in cases where the content information 605 is received, a directed graph, in which the transferor and the transferee are set to be nodes and arrow from the transferor to the transferee is written, is established. In this directed graph, the possible-reception number information corresponds to restriction of arrows from one node, the possible-resale number information corresponds to restriction of path length, and the total reception number information corresponds to restriction of number of nodes in a directed graph.

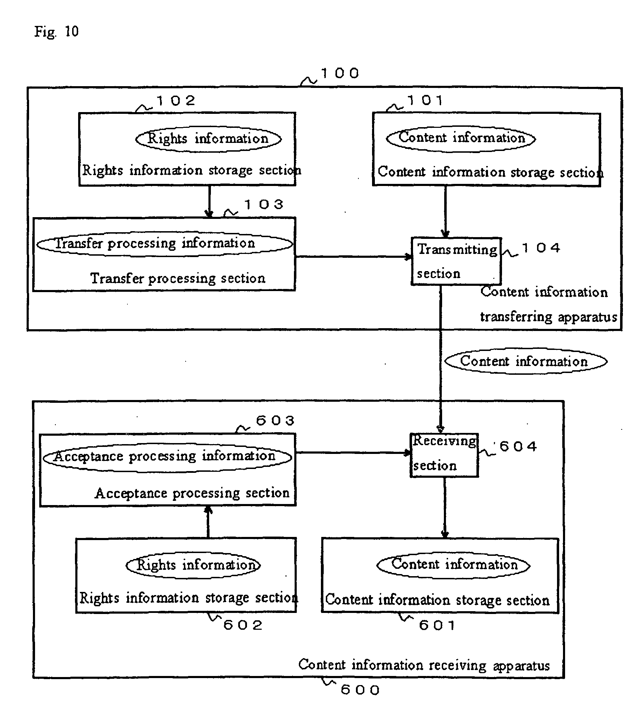

Note that the receiver of the content information of the content information transferring apparatus 100 is not limited to the content information receiving apparatus 600, and the transmitter of the content information, which the content information receiving apparatus 600 receives, is not limited to the content information transferring apparatus 100. The content information, which the content information transferring apparatus 100 transmits, may be received by the content information receiving apparatus 600. Fig. 10 illustrates that content information transmitted by the content information transferring apparatus 100 is received by the content information receiving apparatus 600. Moreover, the rights information may be transmitted from the content information transferring apparatus 100 and may be received by the content information receiving apparatus 600, therefore, the transmission and the reception of the content information between the content information transferring apparatus 100 and the content information receiving apparatus 600 may be performed according to the rights information.

As a result, the content information is transmitted by the content information transferring apparatus 100 and is received by the content information receiving apparatus 600, thereby enabling smooth transmission and reception of the content information, and securing transmission and reception of the content information according to the rights information.

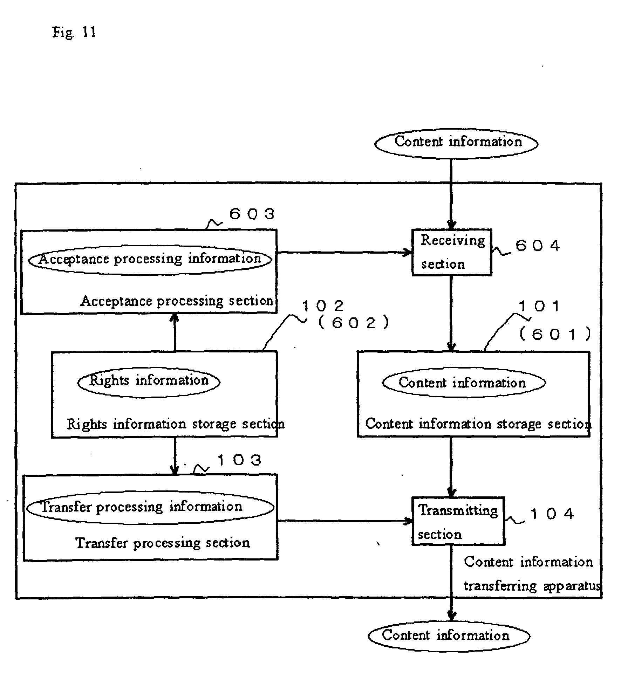

Moreover, one apparatus may have functions of the content information transferring apparatus 100 and of the content information receiving apparatus 600. Fig. 11 is a functional block diagram of that apparatus comprising the content information storage section 101 (602), the rights information storage section 102 (603), the transfer processing section 103, the transmitting section 104, the acceptance processing section 603, and the receiving section 604. The above apparatus operates as shown in the flow chart of Fig. 5 in the case of transmitting content information, and operates as shown in the flow chart of Fig. 9 in the case of receiving content information. The configuration, in which the transmitting section 104 transmits the rights information stored in the rights information storage section 102 (602), and the receiving section 604 receives the rights information and stores it in the rights information storage section 102 (602), is permitted.

According to the apparatus having the above configuration, transmission and reception of the content information is implemented by one apparatus, thereby enabling smooth resale of content information. As a result of smooth resale of content information, it is expected that a market of content information is established. Moreover, general users can receive content information at a low price, and creators of content information can increase earnings by payment of the copyright royalty in conjunction with transmission and reception of content information.

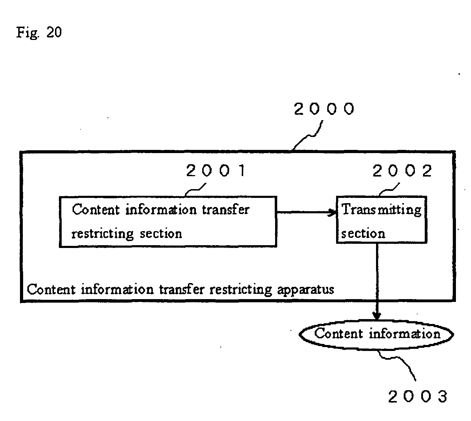

Fig. 20 is a functional block diagram of the content information transferring apparatus related to the second embodiment of the present invention. In Fig. 20, the content information transferring apparatus 2000 comprises the content information transfer restricting section 2001 and the transmitting section 2002.

The content information transfer restricting section 2001 restricts transfer of the content information. "Content information" means the same as in the first embodiment of the present invention. In the present embodiment, content information may be stored in the content information transferring apparatus 2000 as with the first embodiment, or may be received from another apparatus connected to the content information transferring apparatus 2000. In the present embodiment, content information may be limited to some sort, category, or range etc., or may be all objects that the content information transferring apparatus 2000 transmits. In cases where content information is received from another apparatus as described above, the content information transferring apparatus 2000 corresponds to the gateway apparatus managing transmission and reception of content information, thereby enabling to check whether or not the transmission and reception of content information are performed based on restriction of transfer. "Transfer of content information" corresponds to transmission of content information from the content information transferring apparatus 2000 to the other apparatus. Normally, possessor or owner of the content information transferring apparatus 2000 and another apparatus are different. "Restriction of transfer of content information" corresponds to the condition to be fulfilled at the point of transfer content information by the content information transferring apparatus 2000. Examples of these conditions include: transmission number of content information by the content information transferring apparatus 2000 is below a predetermined number, number of possessors that become possessors in conjunction with transmission of content information by the content information transferring apparatus 2000 is below a predetermined number, the date of transmission by the content information transferring apparatus 2000 is before or after a predetermined date, content information is transmitted by the content information transferring apparatus 2000 to the transmission destination which is in or out of a predetermined domain, or a predetermined copyright royalty has been paid or is unpaid. Note that the payment of the copyright royalty may be detected by a signal from the payment receiving section in the content information transferring apparatus 2000, or may be detected by query to the apparatus, different from that of the one managing payment of the copyright royalty. In order to implement restrictions on the number of possessors of content information, the configuration, in which an apparatus managing the number of possessors of content information is prepared, a query to the apparatus is executed at the point of transfer content information by the content information transferring apparatus 2000, and it is confirmed whether the number of transfers of content information is below the restriction, may be permitted. In cases where the number of transfers of content information exceeds the restriction, it is permitted that the content information transferring apparatus 2000 does not assign or renounce ownership in conjunction with abandonment of the content information.

The transmitting section 2002 transmits the content information 2003 in cases where transfer of content information meets the restriction of the content information transfer restricting apparatus 2001. The transmission is executed only when the content information transfer restricting apparatus 2001 determines that transmission is possible.

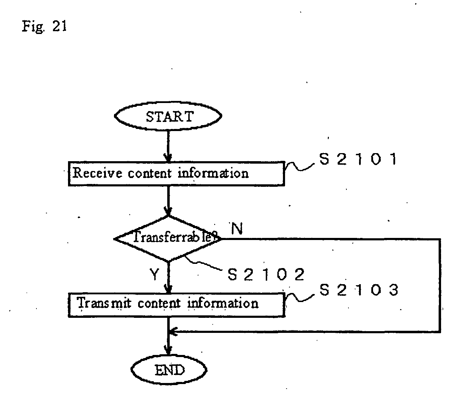

Fig. 21 is a flow chart demonstrating the operation of the content information transferring apparatus 2000. In step S2101, content information is received. In cases where content information is stored in the content information transferring apparatus 2000 as described above, it is received. Alternatively, content information is received from the other apparatus connected to the content information transferring apparatus 2000. In step S2102, it is determined whether or not transfer meets the transfer restriction of content information and whether the transfer is possible. If the transfer is possible, the process proceeds to step S2103, and the transmitting section 2002 transmits the content information.

According to the content information transferring apparatus 2000 described above, transfer of content information according to the intention of the copyright holder is performed by the person who received content information from the copyright holder.

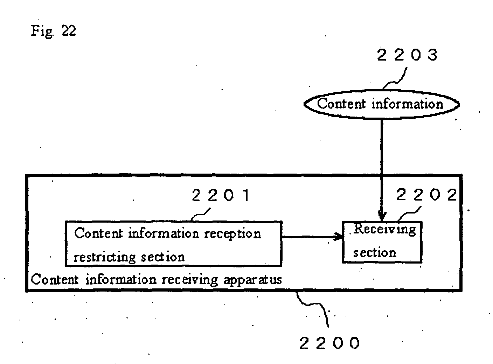

Moreover, Fig. 22 is a functional block diagram of the content information receiving apparatus related to the second embodiment of the present invention. In Fig. 22, the content information receiving apparatus 2200 comprises the content information reception restricting section 2201 and the receiving section 2202.

The content information reception restricting section 2201 restricts reception of the content information. "Content information" means the same as in the first embodiment of the present invention. In the present embodiment, content information may be limited to some sort, category, or range etc., or may be all objects that the content information receiving apparatus 2200 receives. In the present embodiment, content information may be stored inside of the content information receiving apparatus 2200, or may be transmitted to another apparatus connected to the content information receiving apparatus 2200. In this case, content information is received from the other apparatus as described above, the content information receiving apparatus 2000 corresponds to the gateway apparatus managing the transmission and reception of content information, thereby enabling to check whether or not the transmission and reception of content information are performed based on the restriction of reception. "Reception of content information" corresponds to reception of content information from another apparatus by the content information receiving apparatus 2200. Normally, possessor or owner of the content information receiving apparatus 2200 and another apparatus are different. "Restriction of reception of content information" corresponds to condition to be fulfilled at the point of receiving content information by the content information receiving apparatus 2200. Examples of these conditions include: reception number of content information by the content information receiving apparatus 2200 is below a predetermined number, number of possessors or transferees that become possessors in conjunction with reception of content information by the content information receiving apparatus 2200 is below a predetermined number, the date of reception by the content information receiving apparatus 2200 is before or after a predetermined date, the content information to be received by the content information receiving apparatus 2200 is transmitted by the transmitter which is in or out of a predetermined domain, or a predetermined copyright royalty has been paid or unpaid. Note that the payment of the copyright royalty may be detected by a signal from the payment receiving section in the content information receiving apparatus 2200, or may be detected by query to the apparatus, different from that of the one managing payment of the copyright royalty. In order to implement a restriction on the number of possessors of content information, the configuration, in which an apparatus managing the number of possessors of content information is prepared, a query to the apparatus is executed at the point of reception content information by the content information receiving apparatus 2200, and it is confirmed whether the number of receptions of content information is below the restriction, may be permitted. In cases where the number of receptions of content information exceeds the restriction, it is permitted that the content information receiving apparatus 2200 does not transfer or renounce ownership in conjunction with abandonment of the content information.

The receiving section 2202 receives the content information 2203 in case where reception of content information meets the restriction of the content information reception restricting apparatus 2201. The reception is executed only when the content information reception restricting apparatus 2201 determines that reception is possible.

Fig. 22 is a flow chart demonstrating the operation of the content information receiving apparatus 2200. In step S2301, by the content information reception restricting section 2201, it is determined whether or not reception meets the reception restriction of content information and whether reception is possible. If the reception is possible, the process proceeds to step S2302, and the receiving section 2202 receives the content information.

According to the content information receiving apparatus 2200 described above, reception of content information as the copyright holder intends is performed by the person who received content information from the copyright holder.

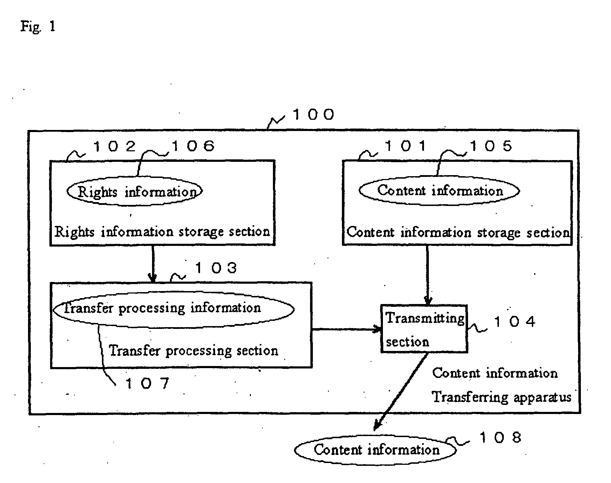

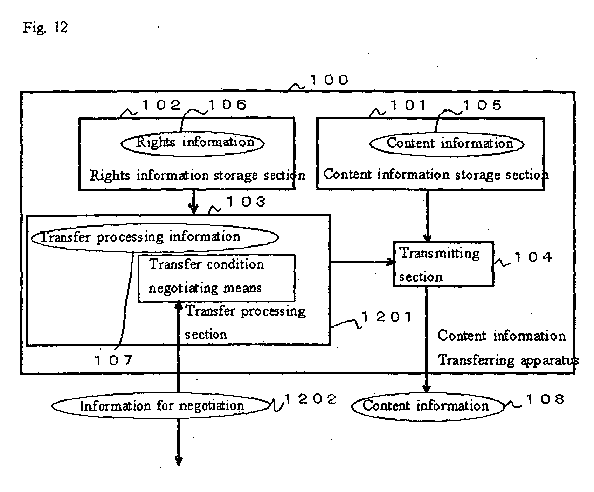

Fig. 12 is a functional block diagram of the content information transferring apparatus related to the third embodiment of the present invention. In Fig. 12, the content information transferring apparatus 100 has the configuration in which the transfer condition negotiating means 1201 is added to the content information transferring apparatus 100 of the first embodiment illustrated in Fig. 1. This transfer condition negotiating means 1201 is included in the transfer processing section, and negotiating transfer condition which is a condition regarding the transfer of the content information, with the content information receiving apparatus 600. For example, in cases where the consideration information determining the upper and/or lower limit of consideration for transfer of content information is included in the rights information 106, since the consideration is not specifically determined, negotiation for determining consideration for transfer is executed. The subject of negotiation is not limited to consideration. In cases where the copyright royalty is determined by the rights information 106 within a certain range, the negotiation for determining the copyright royalty sharing rate may be executed. Therefore, the transfer condition negotiating means 1201 exchanges the information for negotiation 1202 with the content information receiving apparatus 600, and determines the condition regarding the transfer of content information.

With regard to a concrete method and process of negotiation, a publicly known art may be used. For example, multiple conditions regarding transfers, which the possessor of the content information transferring apparatus 100 desires, is input in advance. After that, the first condition is offered to the content information receiving apparatus 600. Moreover, the acceptance condition, which the content information receiving apparatus 600 offers, is received and is determined whether or not it meets the condition offered by the content information transferring apparatus 100. If it meets the condition, it may be inferred that the negotiation is successful. Tf not, the next condition is offered. In cases where the first condition is not met, the content information may become untransmittable, or an agreement at an intermediate position may be reached.

The transfer processing section 103 negotiates the condition regarding transfer of content information by the transfer condition negotiating means 1201 in advance of generating the transfer processing information 107, and generates the transfer processing information 107 based on the negotiation. By comprising the transfer condition negotiating means 1201 as described above, negotiation of transfer condition of content information is performed and transfer of content information becomes possible.

Moreover, the transfer schedule information generating means may be included in the transfer processing section 103 of the content information transferring apparatus 100.

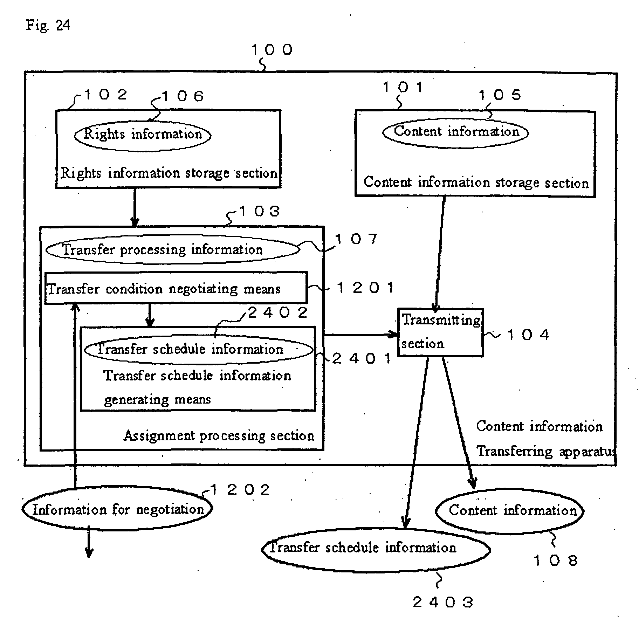

Fig. 24 is a functional block diagram of the content information transferring apparatus 100 wherein the transfer processing section 103 comprises the transfer schedule information generating means 2401.

The transfer schedule information generating means 2401 is a means for generating information indicating result of negotiation of transfer condition as the transfer schedule information 2402. Here, the "transfer schedule information" corresponds to information regarding scheduled transfer. For example, it is information indicating which content is to be transferred to which apparatus at what price.

Note that, in cases where content information cannot be transferred as a result of negotiation of transfer condition, the transfer schedule information generating means 2401 may generate the transfer schedule information indicating that there is no transfer schedule, or may not generate the transfer schedule information.

As described above, in cases where the transfer schedule information generating means 2401 is included in the transfer processing section 103, the transmitting section 104 may transmit the transfer schedule information 2402 generated by the transfer schedule information generating means 2401. In Fig. 24, the transfer schedule information 2403 is indicated as the transfer schedule information 2402 transmitted by the transmitting section 104.

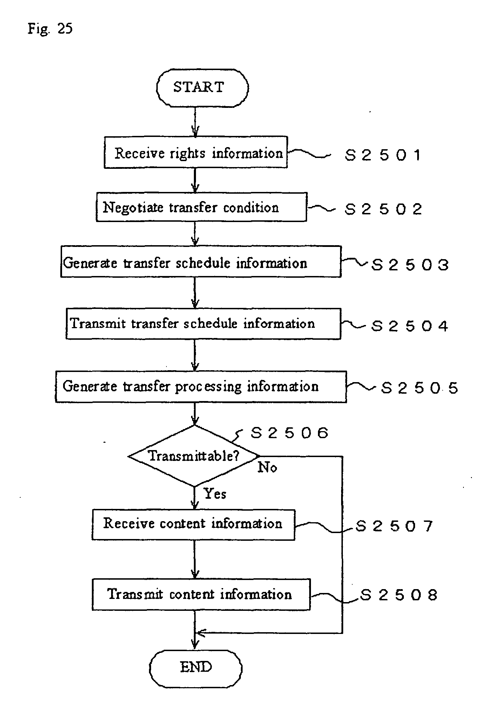

Fig. 25 is a flow chart demonstrating an operation of the content information transferring apparatus 100 in cases where the transfer schedule information generating means 2401 is included in the transfer processing section 103.

In step S2501, the rights information is received from the rights information storage section 102.

In step S2502, negotiation of transfer condition is performed by the transfer condition negotiating means 1201.

In step S2503, the information indicating the result of negotiation in step S2502 is generated as the transfer schedule information by the transfer schedule information generating means 2401.

In step S2504, the transfer schedule information generated in step S2503 is transmitted by the transmitting section 104.

In step S2505, the transfer processing information is generated by the transfer processing section 103. In step S2506, in cases where it is determined based on this transfer processing information that the content information is transferable, therefore, the content information is transmittable; in step S2507, the content information 105 is received from the content information storage section 101 and in step S2508, the content information 105 is transmitted by the transmitting section 104.

As described above, the transfer processing section 103 includes the transfer schedule information generating means 2401 and the transmitting section transmits the transfer schedule information, so that it becomes possible to know in what conditions a transfer of content information is performed. As a result of this, for example, information referred for determining consideration for transfer of content information can be stored.

Moreover, when the transfer schedule information is transmitted, an examination of the transfer schedule information is performed by the apparatus, which received the transfer schedule information, and the information indicating whether or not transfer can be performed may be returned. In this case, the content information transferring apparatus 100 generates the transfer processing information based on its return.

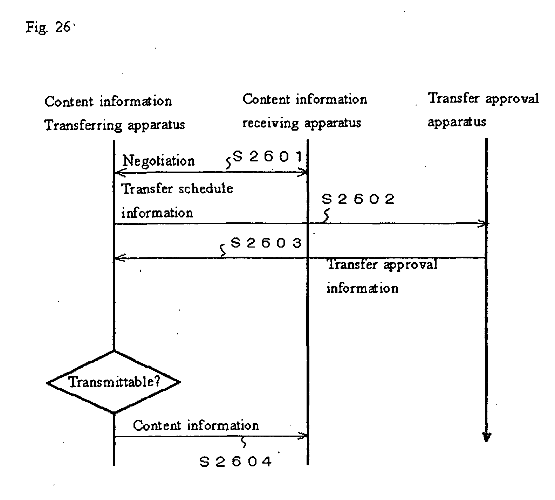

Fig. 26 is a sequential view showing the above process. In this sequential view, the transfer destination of content information by the content information transferring apparatus is the content information receiving apparatus, and the apparatus receiving and examining the transfer schedule information is the transfer approving apparatus.

In step S2601, negotiation of transfer of content information is performed between the content information transferring apparatus and the content information receiving apparatus.

In step S2602, the result of the negotiation is transmitted as the transfer schedule information from the content information transferring apparatus to the transfer approving apparatus.

In step S2603, the result of examination etc. in the transfer approving apparatus is transmitted to the content information transferring apparatus as the transfer approval information.

After that, in the content information transferring apparatus, it is determined whether or not the transfer approval information indicates that the transfer is approvable and it is transmittable. If it is transmittable, in step S2604, the content information is transmitted.

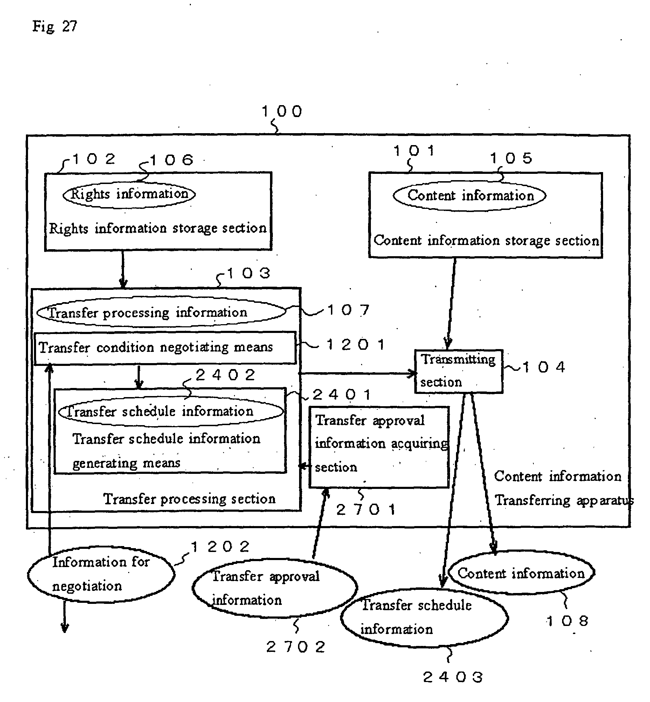

Fig. 27 is a functional block diagram of the content information transferring apparatus for implementing the process illustrated in a sequential view of Fig. 26. The content information transferring apparatus 100 of Fig. 27 is an apparatus wherein the content information transferring apparatus 100 of Fig. 26 further comprises the transfer approval information receiving section 2701.

The transfer approval information receiving section 2701 receives the transfer approval information 2702 which is returned for the transmission of the transfer schedule information. The "transfer approval information" corresponds to information regarding approval of transfer. For example, it is information indicating whether transfer of content information on the condition offered by the transfer schedule information is approvable.

In the content information transferring apparatus 100 of Fig. 27, the transfer processing section 103 generates the transfer processing information 107 based on the transfer approval information 2702 received by the transfer approval information receiving section 2701. For example, in cases where the transfer approval information 2702 approves transfer of the content information, the transfer processing information for transmitting content information according to the rights information. Moreover, the transfer processing section 103 generates the transfer processing information indicating that the content information is untransmittable in cases where the transfer approval information 2702 does not approve the transfer of the content information.

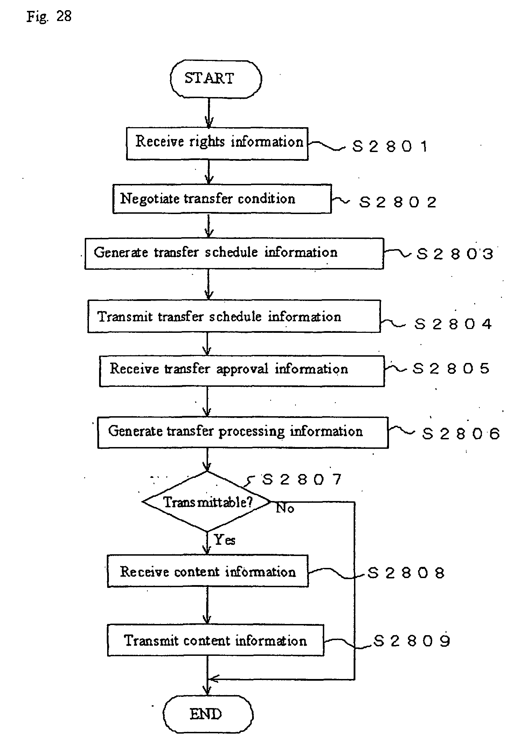

Fig. 28 is a flow chart demonstrating the process of the content information transferring apparatus 100, the functional block diagram of which is illustrated in Fig. 27. In the process illustrated in Fig. 28, a step of receiving the transfer approval information is added to the process illustrated in Fig. 25, and the transfer processing information is generated based on the transfer approval information.

In step S2801, the rights information is received from the rights information storage section 102.

In step S2802, negotiation of transfer condition is performed by the transfer condition negotiating means 1201.

In step S2803, the information indicating the result of negotiation in step S2802 is generated as the transfer schedule information by the transfer schedule information generating means 2401.

In step S2804, the transfer schedule information generated in step S2803 is transmitted by the transmitting section 104.

In step S2805, the transfer approval information is received by the transfer approval information receiving section 2701.

In step 52806, the transfer processing information is generated by the transfer processing section 103. In step S2807, in cases where it is determined based on this transfer processing information that the content information is transferable, therefore, the content information is , transmittable; in step S2808, the content information 105 is received from the content information storage section 101 and in step S2809, the content information 105 is transmitted by the transmitting section 104.

According to the content information transferring apparatus 100, a functional block diagram of which is illustrated in Fig. 27, since the transfer processing information is generated based on the transfer approval information, it becomes possible to reduce, for example, a transfer of content information at a high price which takes advantage of transferee's need, or a transfer of content information at a low price which creates a disadvantage for the copyright holder.

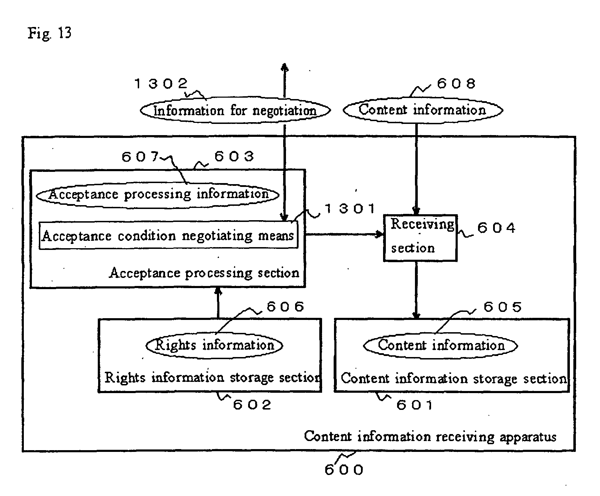

Fig. 13 is a functional block diagram of the content information receiving apparatus related to the third embodiment of the present invention. In Fig. 13, the content information accepting apparatus 600 has the configuration in which the acceptance condition negotiating means 1301 is added to the content information receiving apparatus 600 of the first embodiment illustrated in Fig. 6. This acceptance condition negotiating means 1301 is included in the acceptance processing section, and negotiating acceptance condition which is condition regarding acceptance of content information, with the content information acceptance apparatus 600. For example, in cases where the consideration information determining the upper and/or lower limit of consideration for reception of content information is included in the rights information 606, since the consideration is not determined uniquely, negotiation for determining consideration for acceptance is executed. The subject of negotiation is not limited to consideration. In cases where the copyright royalty is determined by the rights information 606 with a certain range, the negotiation for determining the copyright royalty-sharing rate may be executed. Therefore, the acceptance condition negotiating means 1301 exchanges the information for negotiation 1302 with the content information accepting apparatus 600, and determines the condition regarding acceptance of the content information.

The acceptance processing section 603 negotiates the condition regarding reception of content information by the acceptance condition negotiating means 1301 in advance of generating the acceptance processing information 607, and generates the acceptance processing information 607 based on the negotiation. By comprising the acceptance condition negotiating means 1301 as described above, negotiation of acceptance condition of content information is performed and reception of content information becomes possible.

Moreover, the acceptance schedule information generating means may be included in the acceptance processing section 603 of the content information receiving apparatus 600 and the content information receiving apparatus 600 may further include the transmitting section.

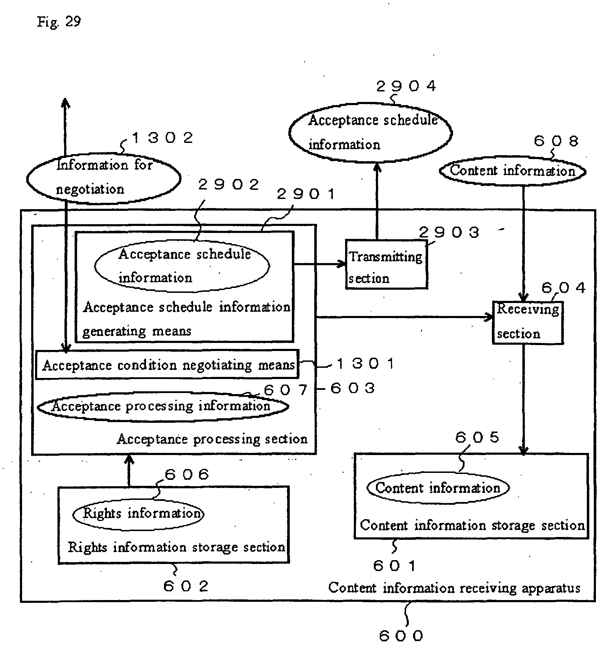

Fig. 29 is a functional block diagram of the content information receiving apparatus 600. Fig. 29 is characterized in that the acceptance processing section 603 of the content information receiving apparatus 600 illustrated in Fig. 13 comprises the acceptance schedule information generating means 2901, and the content information receiving apparatus 600 further comprises the receiving section 602.

The acceptance schedule information generating means 2901 is a means for generating information indicating result of negotiation of acceptance condition as the acceptance schedule information 2902. Here, the "acceptance schedule information" corresponds to information regarding scheduled acceptance. For example, it is information indicating which content is to be accepted from which apparatus at what price.

Note that, in cases where content information cannot be accepted as a result of negotiation of the acceptance condition, the acceptance schedule information generating means 2901 may generate the acceptance schedule information indicating that there is no acceptance schedule, or may not generate the acceptance schedule information.

Moreover, the transmitting section 2903 transmits the transfer schedule information generated by the acceptance schedule information generating means 2901.

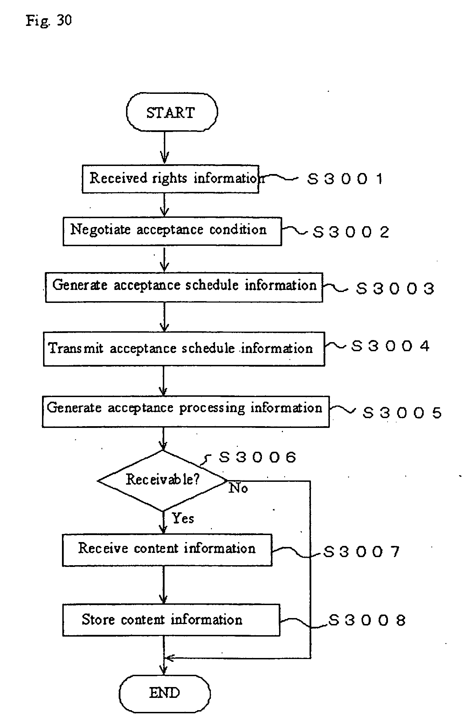

Fig. 30 is a flow chart demonstrating operation of the content information receiving apparatus 600 in cases where the acceptance condition negotiating means 2901 is included in the acceptance processing section 603 and the content information receiving apparatus 600 comprises the transmitting section 2903.

In step S3001, the rights information is received from the rights information storage section 602.

In step S3002, negotiation of acceptance condition is performed by the acceptance condition negotiating means 1301.

In step S3003, the information indicating the result of negotiation in step S3002 is generated as the acceptance schedule information by the acceptance schedule information generating means 2901.

In step S3004, the acceptance schedule information generated in step S3003 is transmitted by the transmitting section 2903.

In step S3005, the acceptance processing information 607 is generated by the acceptance processing section 603. In step S3006, in cases where it is determined based on this acceptance processing information 607 that the content information is acceptable, therefore, the content information is receivable; in step S3007, the content information is received from the receiving section 604 and in step S3008, the content information is stored by the content information storage section 601.

As described above, the acceptance processing section 603 includes the acceptance condition negotiating means 2901 and the content information receiving apparatus 600 comprises the transmitting section 2903, so that it becomes possible to know in what kind of conditions an acceptance of content information is performed. As a result of this, for example, information referred for determining consideration for acceptance of content information can be stored.

Moreover, when the acceptance schedule information is transmitted, an examination of the acceptance schedule information is performed by the apparatus, which received the acceptance schedule information, and the information indicating whether or not acceptance can be performed may be returned. In this case, the content information receiving apparatus 600 generates the acceptance information based on its return.

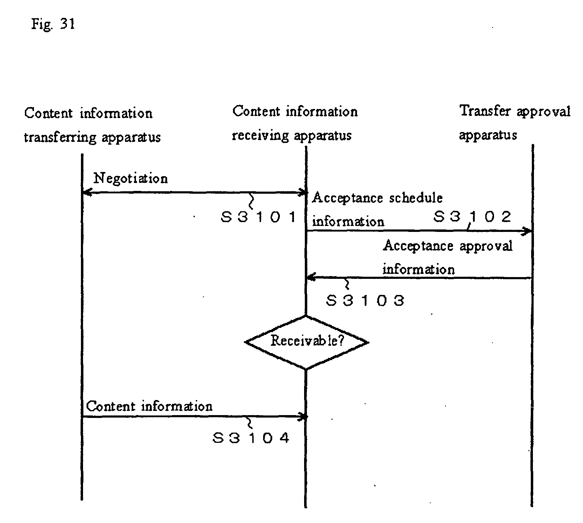

Fig. 31 is a sequential view showing the above process. In this sequential view, the transferor of content information is the content information transferring apparatus, and the apparatus receiving and examining the acceptance schedule information is the acceptance approving apparatus.

In step S3101, negotiation of acceptance of content information is performed between the content information receiving apparatus and the content information transferring apparatus.

In step S3102, the result of the negotiation is transmitted as the acceptance schedule information from the content information receiving apparatus to the acceptance approving apparatus.

In step S3103, the result of examination etc. in the acceptance approving apparatus is transmitted to the content information receiving apparatus as the acceptance approval information.

After that, in the content information accepting apparatus, it is determined whether or not the acceptance approval information indicates the acceptance approval and whether it is receivable. If it is receivable, in step S3104, the content information is accepted.

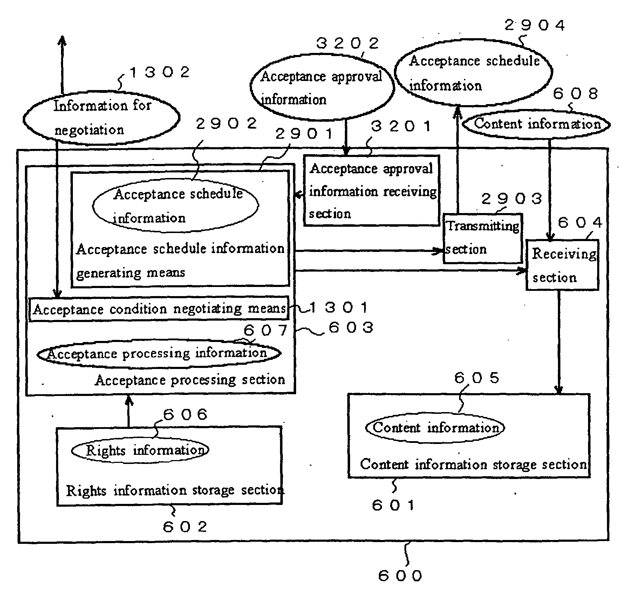

Fig. 32 is a functional block diagram of the content information accepting apparatus for implementing the process illustrated in a sequential view of Fig. 30. The content information receiving apparatus 600 of Fig. 32 is an apparatus wherein the content information accepting apparatus 600 of Fig. 29 further comprises the acceptance approval information receiving section 3201.

The acceptance approval information receiving section 3201 receives the acceptance approval information 3202 which is returned for the transmission of the acceptance schedule information. The "acceptance approval information" corresponds to information regarding approval of acceptance. For example, it is information indicating whether acceptance of 'content information on the condition offered by the acceptance schedule information is approvable.

In the content information receiving apparatus 600 of Fig. 32, the acceptance processing section 103 generates the acceptance processing information 607 based on the acceptance approval information 3202 received by the acceptance approval information receiving section 3201. For example, in cases where the acceptance approval information 3202 approves acceptance of the content information, the acceptance processing information for receiving content information according to the rights information. Moreover, the acceptance processing section 603 generates the acceptance processing information indicating that the content information is unreceivable in cases where the acceptance approval information 3202 does not approve the reception of the content information.

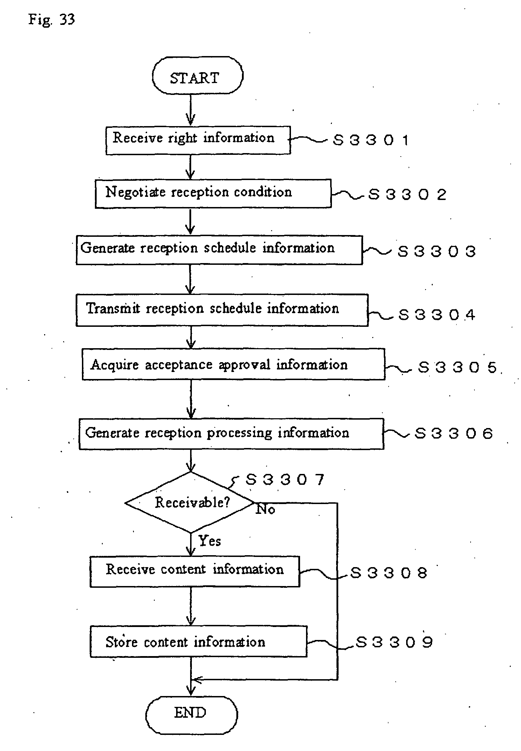

Fig. 33 is a flow chart demonstrating the process of the content information receiving apparatus 600, the functional block diagram of which is illustrated in Fig. 32. In the process illustrated in Fig. 33, a step of receiving the acceptance approval information is added to the process illustrated in Fig. 30, and the acceptance processing information 'is generated based on the acceptance approval information.

In step S3301, the rights information is received from the rights information storage section 602.

In step S3302, negotiation of acceptance condition is performed by the acceptance condition negotiating means 1301.

In step S3303, the information indicating the result of negotiation in step S3302 is generated as the acceptance schedule information by the acceptance schedule information generating means 2901.

In step S3304, the acceptance schedule information generated in step S3303 is transmitted by the transmitting section 2903.

In step S3305, the acceptance approval information is received by the acceptance approval information acquiring section 3201.

In step S3306, the acceptance processing information is generated by the acceptance processing section 603. In step S3307, in cases where it is determined, based on this acceptance processing information, that the content information is acceptable, therefore, the content information is receivable; in step S3308, the content information is received from the transmitting section 604, and in step S3309, the content information is stored in the content information storage section 601.

According to the content information receiving apparatus, a functional block diagram of which is illustrated in Fig. 32, since the acceptance processing information is generated based on the acceptance approval information, it becomes possible to reduce, for example, a reception of content information at a high price which takes advantage of transferee's need, or a reception of content information at a low price which creates disadvantage for the copyright holder thereof.

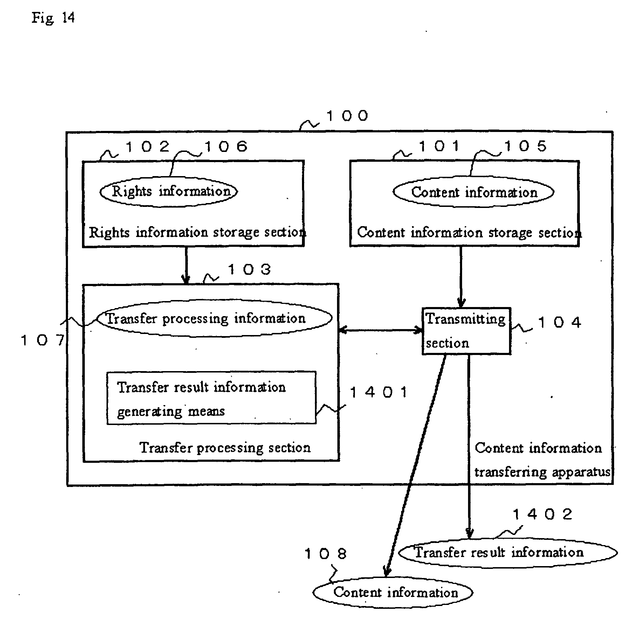

Fig. 14 is a functional block diagram of the content information transferring apparatus related to the fourth embodiment of the present invention. In Fig. 14, the content information receiving apparatus 100 of the first embodiment illustrated in Fig. 1 further comprises the transfer result information generating means 1401, and the transmitting section 104 transmits the transfer result information 1402.

The transfer result information generating means 1401 generates the transfer result information regarding the transfer result. "Transfer result" corresponds to the result of transfer performed by transmitting the content information 108 by the transmitting section 104, and means in what conditions the transfer has been performed. For example, it indicates when and which content information is transferred to which apparatus specified by IP address, domain name, host name, port number, URL, mail address, telephone number, mobile phone number, or fax number etc., at what price, and how much of a copyright royalty is to be paid. The transfer result information 1402 may be transmitted to a tertiary apparatus which is different from the apparatus to which the content information 108 has been transmitted. This tertiary apparatus can receive the transfer result information 1402 and, for example, can extract the information regarding the copyright royalty therefrom, and can perform collection process of the copyright royalty.

As a method of specifying the tertiary apparatus, which is the transmission destination of this transfer result information 1402, that rights information 106 may include.

Moreover, the rights information 106 may include the consideration information determining the upper and/or lower limit of transfer of the content information 105. The consideration information is included in the rights information 106, thereby making it possible to include information indicating at how much consideration the transfer has been performed in the transfer result information 1402. Moreover, it becomes possible to know the value of the content information in distribution, and to determine the consideration of the same sort of the content information by referring to the value.

Moreover, by determining the upper limit, it becomes possible to restrict transfer at an exorbitant price as many result in an antitrust violation.

Moreover, by determining the lower limit, it becomes possible to secure the lowest price of the royalty to be paid to the rights holder of the content information such as the copyright holder etc.

In the operation of the content information transferring apparatus 100 illustrated in Fig. 14, after the step S505 of the flow chart in Fig. 5, a signal indicating termination of transmission of content information is passed from the transmitting section 104 to the transfer processing section 103, the transfer processing section 103 generates the transfer result information by the transfer result information generating means 1401 and passes it to the transmitting section 104, and the transmitting section 104 transmits it as the transfer result information 1402.

Moreover, in the present embodiment, as with the third embodiment, the content information transferring apparatus 100 may comprise the transfer condition negotiating means and may negotiate the transfer condition regarding transfer of the content information with the content information accepting apparatus 600, and the transfer result information generating means 1401 may generate the transfer result information based on the transfer condition achieved by negotiation.

As described above, by comprising the transfer result information generating means 1401, it becomes possible to record the transfer result in the tertiary apparatus, thereby ensuring the certification of transfer of content information. Moreover, according to the tertiary apparatus, it becomes possible to perform the collection process of the copyright royalty, thereby securing the rights of copyright holder.

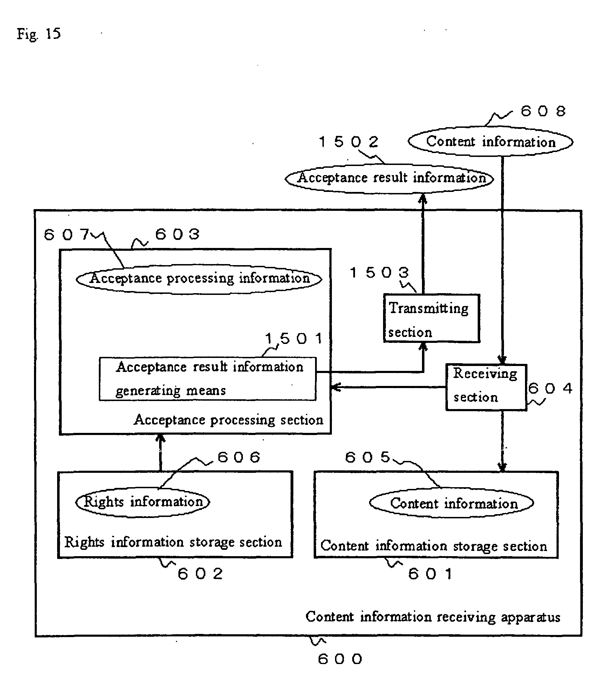

Fig. 15 is a functional block diagram of the content information accepting apparatus related to the fourth embodiment of the present invention. In Fig. 15, the content information receiving apparatus 600 of the first embodiment illustrated in Fig. 6 further comprises the acceptance result information generating means 1501, and the receiving section 1503.

The acceptance result information generating means 1501 generates the acceptance result information regarding the acceptance result. "Acceptance result" corresponds to the result of acceptance implemented by receiving the content information 608 by the receiving section 604, and by storing the content information by the content information storage section 601, and means in what conditions the acceptance has been performed. For example, it indicates when and which content information is transferred from which apparatus specified by IP address, domain name, host name, port number, URL, mail address, telephone number, mobile phone number, or fax number etc., at what price, and how much of a copyright royalty is to be paid.

The transmitting section 1503 transmits the transfer result information 1502 generated by the transfer result information generating means 1501. This transfer result information 1502 may be transmitted to a tertiary apparatus which is different from the transmitter of the content information 608. This tertiary apparatus can receive the acceptance result information 1502, and, for example, can extract the information regarding the copyright royalty therefrom, and can perform the collection process of the copyright royalty.

In order to specify the tertiary apparatus, which is the transmission destination of this acceptance result information 1502, the rights information 606 may include information regarding said specification of the tertiary apparatus.

Moreover, the rights information 606 may include the consideration information determining upper the and/or lower limit of acceptance of the content information 605. The consideration information is included in the rights information 606, thereby making it possible to include information indicating at how much consideration the acceptance has been performed in the acceptance result information 1502. Moreover, it becomes possible to know the value of the content information 605 in distribution, and to determine the consideration of the same sort of the content information by referring to the value.

Moreover, by determining the upper limit, it becomes possible to restrict acceptance at an exorbitant price, which could be an anti-trust violation.

Moreover, by determining the lower limit, it becomes possible to secure the lowest price of the royalty to be paid to the right holder of the content information such as the copyright holder etc.

In the operation of the content information receiving apparatus 600 illustrated in Fig. 15, after the step S905 of the flow chart in Fig. 9, a signal indicating storage of content information is passed from the content information storage section 101 to the acceptance processing section 603, the acceptance processing section 603 generates the acceptance result information by the acceptance result information generating means 1501 and passes it to the transmitting section 1503, and the transmitting section 1503 transmits it as the acceptance result information 1502.

Moreover, in the present embodiment, as with the third embodiment, the content information receiving apparatus 600 may comprise the acceptance condition negotiating means and may negotiate the acceptance condition regarding acceptance of the content information with the content information receiving apparatus 100, and the acceptance result information generating means 1501 may generate the acceptance result information based on the acceptance condition achieved by negotiation.

As described above, by comprising the acceptance result information generating means 1501, it becomes possible to record the acceptance result in the tertiary apparatus, thereby ensuring the certification of acceptance of the content information. Moreover, according to the tertiary apparatus, it becomes possible to perform the collection process of the copyright royalty, thereby securing the right of the copyright holder.

Moreover, in cases where by using both of the content information receiving apparatus 100 of Fig. 14 and the content information transferring apparatus 600 of Fig. 15, the transfer result information 1402 and the acceptance result information 1502 are transmitted to the same tertiary apparatus; it becomes possible to check the transfer result information 1402 which is a result of transfer of content information and the acceptance result information 1502 which is a result of acceptance of content information. For example, only when they could be checked, a collection of the copyright royalty is performed, thereby ensuring the collection process thereof. If checking is impossible, for example, the transfer result information 1402 exists whereas the acceptance result information 1502 does not exist; it can be inferred that a malfunction has occurred, and its cause is investigated, so as to detect a fraud.

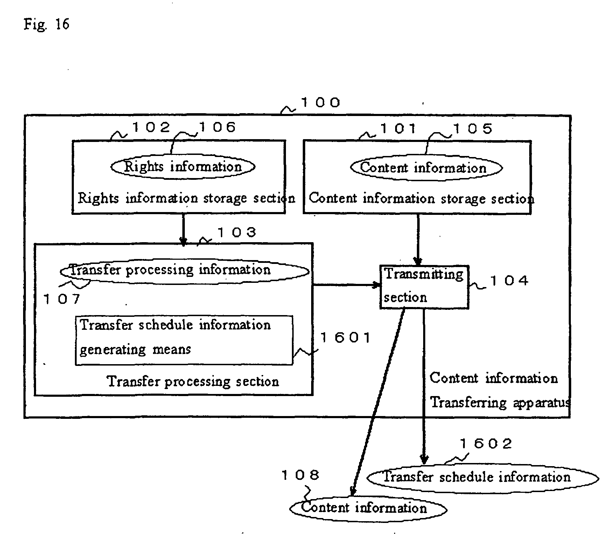

Fig. 16 is a functional block diagram of the content information transferring apparatus related to the fifth embodiment of the present invention. In Fig. 16, the content information receiving apparatus 100 has a configuration wherein the transfer schedule information generating means 1601 is added to the content information receiving apparatus 100 of the first embodiment of Fig. 1, and the transmitting section 104 transmits the acceptance schedule information 1602.

The transfer schedule information generating means 1601 generates the transfer schedule information regarding transfer schedule. "Transfer schedule" corresponds to information indicating a transfer schedule implemented by transmitting the content information 108. "Information regarding transfer schedule" corresponds to information indicating in what conditions transfer is performed. For example, it indicates which content information is transferred to which apparatus specified by IP address, domain name, host name, port number, URL, mail address, telephone number, mobile phone number, or FAX number etc. , at what price, and how much of a copyright royalty is to be paid. This transfer schedule information 1602 may be transmitted as a preliminary notice of transmitting the content information 108 to the apparatus which is the transmission destination of the content information 108, or may be transmitted to a tertiary apparatus. Moreover, the transfer schedule information receiver information specifying the transmission destination of the transfer schedule information 1602 such as IP address, domain name, host name, port number, URL, mail address, telephone number, mobile phone number, or fax number etc., may be included in the rights information 106.

In the operation of the content information receiving apparatus 100 illustrated in Fig. 16, before executing the step S505 of a flow chart in Fig. 5, the transfer processing section 103 generates the transfer schedule information from the transfer processing information 107 by the transfer schedule information generating means 1601, and the transmitting section 104 transmits it as the transfer schedule information 1602.

Moreover, in the present embodiment, as in the third embodiment, the content information receiving apparatus 100 may comprise the transfer condition negotiating means. Moreover, as shown in the fourth embodiment, it may comprise the transfer result information generating means.

As described above, by comprising the transfer schedule information generating means 1601 and by transmitting the transfer schedule information, it becomes possible to notify transmission to a transmission destination of content information. Moreover, it becomes possible to notify details of transfer to a third party, and to determine whether a transfer is performed under fair transfer conditions.

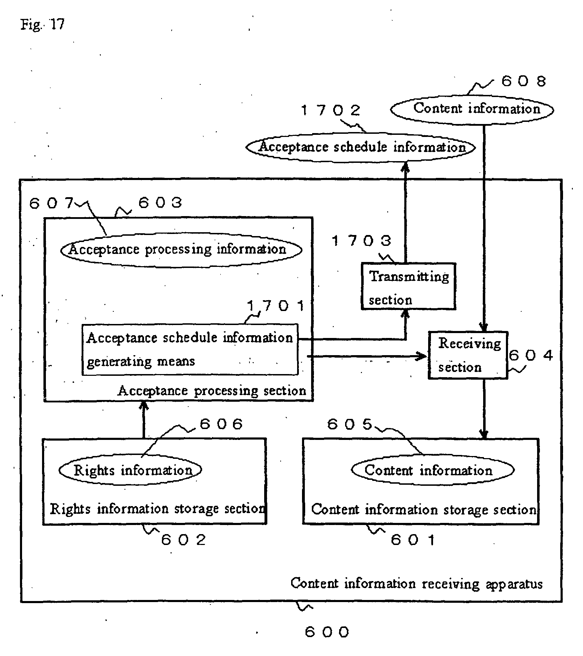

Fig. 17 is a functional block diagram of the content information receiving apparatus related to the fifth embodiment of the present invention. In Fig.17, the content information receiving apparatus 600 has a configuration wherein the acceptance schedule information generating means 1701 and the transmitting section 1703 are added to the content information receiving apparatus 600 of the first embodiment of Fig. 6.

The acceptance schedule information generating means 1701 generates the acceptance schedule information regarding acceptance schedule. "Acceptance schedule" corresponds to information indicating the transfer wherein the content information 608 is received by the receiving section 604 and is stored in the content information storage section 601. "Information regarding acceptance schedule" corresponds to information indicating in what conditions the acceptance is performed. For example, it indicates which content information is received from which apparatus specified by IP address, domain name, host name; port number, URL, mail address, telephone number, mobile phone number, or fax number etc., at what price, and how much of a copyright royalty is to be paid. This acceptance schedule information may be transmitted as a preliminary notice of transmitting the content information 608 to the apparatus which is the transmitter of the content information 608, or may be transmitted to the tertiary apparatus. Moreover, the transfer schedule information receiver information specifying the transmission destination of the acceptance schedule information such as IP address, domain name, host name, port number, URL, mail address, telephone number, mobile phone number, or fax number etc., may be included in the rights information 606.

The transmitting section 1703 transmits the acceptance schedule information generated by the acceptance schedule information generating means 1701 as the acceptance schedule information 1702.

In the operation of the content information receiving apparatus 600 illustrated in Fig. 17, before executing the step S904 of a flow chart in Fig. 9, the acceptance processing section 603 generates the acceptance schedule information from the acceptance processing information 607 and the rights information 606 by the acceptance schedule information generating means 1701, and the transmitting section 1703 transmits it as the acceptance schedule information 1702.

Moreover, in the present embodiment, as in the third embodiment, the content information receiving apparatus 600 may comprise the acceptance condition negotiating means. Moreover, as described in the fourth embodiment, it may comprise the acceptance result information generating means.

As described above, by comprising the acceptance schedule information generating means 1701 and by transmitting the acceptance schedule information, it becomes possible to notify a reception or a request to a transmission destination of content information. Moreover, by transmitting the acceptance schedule information to a tertiary apparatus, it becomes possible to notify details of acceptance to a third party and to judge whether an acceptance is performed under fair conditions.

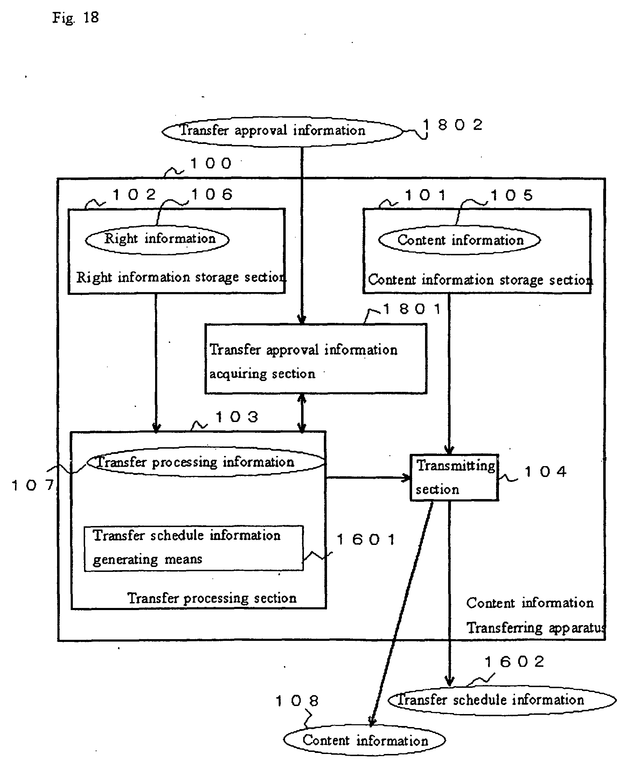

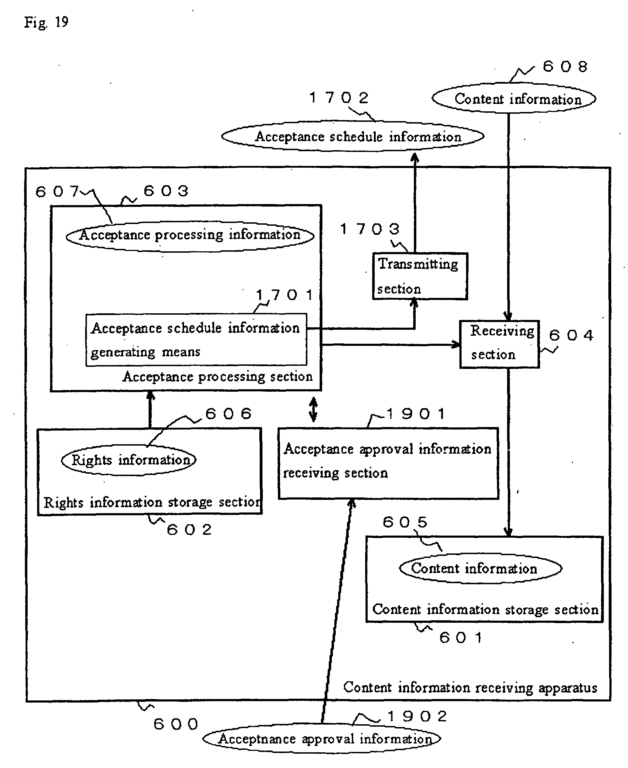

Fig. 18 is a functional block diagram of the content information transferring apparatus related to the sixth embodiment of the present invention. In Fig.19, the content information receiving apparatus 100 has a configuration wherein the transfer approval information receiving section 1801 is added to the content information receiving apparatus 100 of the fifth embodiment of Fig. 16.

The transfer approval information receiving section 1801 receives the transfer approval information 1802 regarding the transfer approval returned for the transmission of the transfer schedule information 1602. "Based on the transmission of the transfer schedule information 1602" means that it is based on the transfer schedule information 1602 which is transmitted. "Returned" means that transmission to the content information receiving apparatus 100 is performed after transmission of the transfer schedule information 1602. "Information regarding transfer approval" corresponds to information indicating whether or not transfer is approved by the transfer schedule information indicated by the transfer schedule information 1602. In cases where the transfer schedule information 1602 is transmitted to the transmission destination of content information, the transfer approval information 1802 corresponds to a message as the final confirmation regarding transfer. Moreover, in cases where the transfer schedule information 1602 is transmitted to a tertiary apparatus and the transfer approval information 1802 is transmitted from the tertiary apparatus, it corresponds to the result indicating that the transfer schedule information 1602 is examined by the tertiary apparatus.

In the present embodiment, the transfer processing section 103 generates the transfer processing information 107 based on the transfer approval information 1802 received by the transfer approval information acquiring section 1801. In cases where the transfer approval information 1802 indicates that transfer is not approvable, the transfer processing information 107 is not passed to the transmitting section 104 or the transfer processing information 107 including information indicating that the content information 105 is not transmittable is passed to the transmitting section 104.

Therefore, in the operation of the content information transferring apparatus 100, before the step S502 of the flow chart in Fig. 5, the transfer schedule information 1602 is generated and transmitted, an instruction signal of acquiring the transfer approval information is transmitted from the transfer processing section 103 to the transfer approval information receiving section 1801, and in cases where the acceptance approval information receiving section 1901 receives the transfer approval information 1802, the details thereof are transmitted to the transfer processing section 103. In step S502, the transfer processing section 103 generates the transfer processing information 107 based on whether or not the transfer is possible.

As described above, the transfer approval information receiving section 1801 receives the transfer approval information 1802 and according to that, the transfer processing section 103 generates the transfer processing information 107, thereby enabling reception of the final 1 confirmation of transfer schedule.

Moreover, the tertiary apparatus transmits the transfer approval information 1802, so that it becomes possible to receive a result of examination of the transfer schedule information 1602 examined by the tertiary apparatus and to prevent transmission which violates the right of the copyright holder.

Fig. 19 is a functional block diagram of the content information receiving apparatus related to the sixth embodiment of the present invention. In Fig. 19, the content information receiving apparatus 600 has a configuration wherein the acceptance approval information acquiring section 1901 is added to the content information receiving apparatus 600 of the fifth embodiment of Fig. 17.

The acceptance approval information receiving section 1901 receives the acceptance approval information 1902 regarding the acceptance approval returned for the transmission of the acceptance schedule information 1702. "Based on the transmission of the acceptance schedule information 1702" means that it is based on the acceptance schedule information 1702 which is transmitted. "Returned" means that transmission to the content information receiving apparatus 600 is performed after transmission of the acceptance schedule information 1702. "Information regarding acceptance approval" corresponds to information indicating whether or not acceptance is approved by the acceptance schedule information indicated by the acceptance schedule information 1702. In cases where the acceptance schedule information 1702 is transmitted to the transmission destination of content information, the acceptance approval information 1902 corresponds to a message as the final confirmation regarding acceptance. Moreover, in cases where the acceptance schedule information 1702 is transmitted to the tertiary apparatus and the transfer approval information 1802 is transmitted from the tertiary apparatus, it corresponds to the result indicating that the acceptance schedule information 1702 is examined by the tertiary apparatus.

In the present embodiment, the acceptance processing section 603 generates the acceptance processing information 607 based on the acceptance approval information 1902 received by the acceptance approval information receiving section 1901. In cases where the acceptance approval information 1902 indicates that acceptance is not approvable, the acceptance processing information 607 is not passed to the transmitting section 604 or the acceptance processing information 607 including information indicating that the content information 608 is not transmittable is passed to the transmitting section 604.

Therefore, in the operation of the content information receiving apparatus 600, before the step S902 of the flow chart in Fig. 9 and after transmitting the acceptance schedule information 1702, an instruction signal of receiving the acceptance approval information is transmitted from the acceptance processing section 603 to the acceptance approval information receiving section 1901, and in cases where the acceptance approval information receiving section 1901 receives the acceptance approval information 1902, the details thereof are transmitted to the acceptance processing section 603. In step S902, the acceptance processing section 603 generates the acceptance processing information 607 according to whether or not the acceptance is possible.

As described above, the acceptance approval information receiving section 1901 receives the acceptance approval information 1902, and according to that, the acceptance processing section 603 generates the acceptance processing information 607; thereby enabling reception of the final confirmation of the acceptance schedule. Moreover, the tertiary apparatus transmits the acceptance approval information 1902, so that it becomes possible to receive the result of examination of the acceptance schedule information 1702 examined by the tertiary apparatus and to prevent reception of content information which violates the rights of the copyright holder.

As described above, according to the present invention, firstly, it becomes possible to transfer and receive by transmission of content information according to the rights information. Moreover, the copyright holder specifies the rights information, thereby enabling transfer and reception of content information corresponding to the intention of the copyright holder. Furthermore, the content information transferring apparatus of the present invention transmits the content information and the content information receiving apparatus receives it, thereby enabling smooth transmission and reception of content information. Therefore, it enables secure transmission and reception of content information according to the rights information.

Secondly, by comprising the transfer condition negotiating means and the acceptance condition negotiating means, it becomes possible to negotiate transfer condition and acceptance condition of content information. Therefore, it enables transfer and acceptance of content information under advantageous conditions.

Thirdly, by comprising the transfer result information generating means and the acceptance result information generating means, it becomes possible to record transfer and acceptance results in the tertiary apparatus, so that it enables certification of transfer/acceptance of the content information. Therefore, it enables certification of transfer and acceptance of content information. Moreover, the transfer result and the acceptance result are transmitted to the tertiary apparatus and recorded therein, thereby enabling the collection process of the copyright royalty. Therefore, it becomes possible to secure the right of copyright holder.

Fourthly, by comprising the transfer schedule information generating means and the acceptance schedule information generating means, and by transmitting the transfer schedule information and the acceptance schedule information, it becomes possible to notify transmission of content information. Moreover, by transmitting the transfer schedule information and the acceptance schedule information to the tertiary apparatus, it becomes possible to notify details of transfer and acceptance. Therefore, it becomes possible to determine whether or not the transfer and acceptance are performed under fair transfer and acceptance conditions.

Fifthly, by receiving the transfer approval information and the acceptance approval information, and by generating the transfer processing information and the acceptance processing information according thereto, it becomes possible to receive the final confirmation of transfer schedule and the acceptance schedule. Moreover, by transmitting the transfer approval information and the acceptance approval information from the tertiary apparatus, it becomes possible to receive an examination result of the transfer schedule information and the acceptance schedule information examined by the tertiary apparatus. Therefore, for example, it becomes possible to prevent transmission of content information which violates the right of copyright holder.

Sixthly, the right information includes the consideration information determining the upper and/or lower limit of consideration for transfer/acceptance of content information, so that the transfer/acceptance result information can include information indicating how much consideration is paid for the transfer/acceptance. Thereby it becomes possible to know the value of the content information in distribution, and to determine the consideration of the content information by referring to that. Moreover, by determining the upper limit, it becomes able to restrict acceptance at an exorbitant price which may be an antitrust violation. Moreover, by determining the lower limit, it becomes possible to secure the lowest price of the royalty to be paid to the right holder of the content information such as the copyright holder etc., thereby enabling guarantee of the right.

## Claims

1. A content information transferring apparatus comprising:
a. content information storage section for storing the content information,
a rights information storage section storing rights information determining transfer restriction of the content information,
a transfer processing section generating a transfer processing information regarding transfer of the content information based on the rights information stored in the rights information storage section, and
a transmitting section for transmitting the content information stored in the content information storage section based on the transfer processing information generated by the transfer processing section.

2. A content information receiving apparatus comprising:
a content information storage section for storing the content information,
a rights information storage section storing rights information determining the acceptance restriction of the content information,
an acceptance processing section generating an acceptance processing information for reception the content information based on the rights information stored in the rights information storage section, and
a receiving section for receiving the content information in order to store the content information into the content information storage section based on the acceptance processing information generated by the acceptance processing section.

3. A content information transferring apparatus restricting transfer of the content information and comprising:
a content information transfer restricting section for restricting transfer of the content information when the content information transferring apparatus transfers the content information,
a transmitting section for transmitting the content information in cases where transfer of the content information fulfills the condition given by the content information transfer restricting section.

4. A content information receiving apparatus restricting reception of the content information and comprising:
a content information reception restricting section for restricting reception of the content information when said content information receiving apparatus receives the content information,
a receiving section for receiving the content information in cases where acceptance of the content information fulfills the condition given by the content information reception restricting section.

5. The content information transferring apparatus as defined in claim 1 wherein the transmitting section transmits the rights information determining restriction of transfer of the content information to be transmitted.

6. The content information transferring apparatus as defined in claim 2 wherein the receiving section receives the rights information determining restriction of reception of the content information to be received.

7. The content information transferring apparatus as defined in claim 1 wherein the transfer processing section comprises a transfer condition negotiating means for negotiating transfer condition regarding transfer of the content information with the content information receiving apparatus.

8. The content information receiving apparatus as defined in claim 2 wherein the acceptance processing section comprises an acceptance condition negotiating means for negotiating acceptance condition regarding reception of the content information with the content information transferring apparatus.

9. The content information transferring apparatus as defined in claim 5 wherein the transfer processing section comprises a transfer result information generating means for generating transfer result information regarding transfer result, and the transmitting section transmits the transfer result information generated by the transfer result information generating means.

10. The content information receiving apparatus as defined in claim 6, wherein the acceptance processing section comprises an acceptance result information generating means for generating acceptance result information regarding acceptance result, comprising a transmitting section transmits the acceptance result information generated by the acceptance result information generating means.

11. The content information transferring apparatus as defined in either claim 1 or 5 wherein said transfer processing section comprises a transfer schedule information generating means for generating transfer schedule information regarding scheduled transfer, and the transmitting section transmits the transfer schedule information generated by the transfer schedule information generating means.

12. The content information receiving apparatus as defined in either claim 2 or 6, wherein the acceptance processing section comprises an acceptance schedule information generating means for generating acceptance schedule information regarding scheduled acceptance, comprising a transmitting section transmits the acceptance schedule information generated by the acceptance schedule information generating means.

13. The content information transferring apparatus as defined in claim 7 wherein said transfer processing section comprises a transfer schedule information generating means for generating information indicating a result of negotiation on the transfer condition as the transfer schedule information regarding scheduled transfer, and the transmitting section transmits the transfer schedule information generated by the transfer schedule information generating means.

14. The content information receiving apparatus as defined in claim 8 wherein said acceptance processing section comprises an acceptance schedule information generating means for generating information indicating a result of negotiation on the acceptance condition as the acceptance schedule information regarding scheduled acceptance, and the transmitting section transmits the acceptance schedule information generated by the acceptance schedule information generating means.

15. The content information transferring apparatus as defined in claim 11 comprising:
a transfer approval information receiving section for receiving transfer approval information regarding the approval of transfer which is returned for the transmission of the transfer schedule information, and wherein the transfer processing information is generated based on the transfer approval information received by the transfer approval information receiving section.

16. The content information receiving apparatus as defined in claim 12 comprising:
an acceptance approval information receiving section for receiving acceptance approval information regarding the approval of acceptance which is returned for the transmission of the acceptance schedule information, and wherein the acceptance processing information is generated based on the acceptance approval information received by the acceptance approval information receiving section.

17. The content information transferring apparatus as defined in claim 13 comprising:
a transfer approval information receiving section for receiving transfer approval information regarding the approval of transfer which is returned for the transmission of the transfer schedule information, and wherein the transfer processing section generates the transfer processing information based on the transfer approval information received by the transfer approval information receiving section.

18. The content information receiving apparatus as defined in claim 14 comprising:
an acceptance approval information receiving section for receiving acceptance approval information regarding the approval of acceptance which is returned for the transmission of the acceptance schedule information, and wherein the acceptance processing section generates the acceptance processing information based on the acceptance approval information received by the acceptance approval information receiving section.

19. The content information transferring apparatus as defined in claim 5 wherein the rights information includes possible-transfer number information determining the number of possible-transfers of the content information.

20. The content information receiving apparatus as defined in claim 6 wherein the rights information includes possible-reception number information determining the number of possible-receptions of the content information.

21. The content information transferring apparatus as defined in claim 5 wherein the rights information includes possible-transferee number information determining the number of people who can become a transferor by a transfer of the content information.

22. The content information receiving apparatus as defined in claim 6 wherein the rights information includes possible-transferee number information determining the number of people who can become a transferee by a reception of the content information.

23. The content information transferring apparatus as defined in either claim 1 or 5 wherein the rights information includes consideration information determining an upper limit and/or a lower limit of the consideration of the transfer of the content information.

24. The content information receiving apparatus as defined in either claim 2 or 6 wherein the rights information includes consideration information determining an upper limit and/or a lower limit of the consideration of the acceptance of the content information.

25. The content information transferring apparatus as defined in claim 5 wherein the rights information includes possible-resale number information determining the number of possible-resales of the content information.

26. The content information receiving apparatus as defined in claim 6 wherein the rights information includes possible-resale number information determining the number of possible-resales of the content information.

27. The content information transferring apparatus as defined in claim 5 wherein the rights information includes transferable period information determining transferable period of the content information.

28. The content information receiving apparatus as defined in claim 6 wherein the rights information includes receivable period information determining receivable period of the content information.

29. The content information transferring apparatus as defined in claim 5 wherein the rights information includes possible-transferee information determining possible-transferee of the content information.

30. The content information receiving apparatus as defined in claim 6 wherein the rights information includes possible-transferor information determining possible-transferor of the content information.

31. The content information transferring apparatus as defined in claim 5 wherein the rights information includes copyright royalty information regarding the copyright royalty to be paid based on the transfer of the content information.

32. The content information receiving apparatus as defined in claim 6 wherein the rights information includes copyright royalty information regarding the copyright royalty to be paid based on the reception of the content information.

33. The content information transferring apparatus as defined in claim 5 wherein the rights information includes partial transfer restricting information determining the restriction of the partial transfer.

34. The content information receiving apparatus as defined in claim 6 wherein the rights information includes partial reception restricting information determining the restriction of the partial reception.

35. The content information transferring apparatus as defined in claim 5 wherein the rights information includes transferee-position information restricting the content information receiving apparatus, which is the transmission destination of the content information, by the position thereof.

36. The content information receiving apparatus as defined in claim 6 wherein the rights information includes transferor-position information restricting the content information transferring apparatus, which is the transmission source of the content information, by the position thereof.

37. The content information transferring apparatus as defined in claim 9 wherein the rights information includes transfer result information recipient information regarding the transmission destination of the content transfer result information.

38. The content information transferring apparatus as defined in claim 10 wherein the rights information includes acceptance result information recipient information regarding the transmission destination of the content acceptance result information.

39. The content information transferring apparatus as defined in claim 11 wherein the rights information includes transfer schedule information recipient information regarding the transmission destination of the content transfer schedule information.

40. The content information receiving apparatus as defined in claim 12 wherein the rights information includes acceptance schedule information recipient information regarding the transmission destination of the content acceptance schedule information.

41. The content information transferring apparatus as defined in claim 5 wherein the rights information includes copyright royalty information regarding the copyright royalty to be paid based on the transfer of the content.

42. The content information receiving apparatus as defined in claim 6 wherein the rights information includes copyright royalty information regarding the copyright royalty to be paid based on the reception of the content.

43. The content information transferring apparatus as defined in claim 5 wherein the rights information includes copyright royalty payer information for determining the payer of the copyright royalty based on the transfer of the content.

44. The content information receiving apparatus as defined in claim 6 wherein the rights information includes copyright royalty payer information for determining the payer of the copyright royalty based on the reception of the content.

45. The content information transferring apparatus as defined in claim 5 wherein the rights information includes copyright royalty sharing rate information for determining sharing rate among the payers of the copyright royalty based on the transfer of the content.

46. The content information receiving apparatus as defined in claim 6 wherein the rights information includes copyright royalty sharing rate information for determining sharing rate among the payers of the copyright royalty based on the reception of the content.

47. The content information transferring apparatus as defined in claim 5 wherein the rights information includes transfer total-number information determining the total-number of the transfers of the content information.

48. The content information receiving apparatus as defined in claim 6 wherein the rights information includes acceptance total-number information determining the total-number of the receptions of the content information.

49. The content information transferring apparatus as defined in claim 5 wherein the content information includes content and/or usage-condition information determining conditions regarding usage of content.

50. The content information receiving apparatus as defined in claim 6 wherein the content information includes content and/or usage-condition information determining conditions regarding usage of content.

51. A content information transfer program for causing a computer to execute following steps:
a content information storage step of storing content information,
a rights information storage step of storing the rights information determining restriction of transfer of the content information,
a transfer processing step of generating transfer processing information regarding transfer of the content information based on the rights information stored by the rights information storage step, and
a transmitting step of transmitting the content information based on the transfer processing information generated by the transfer processing step, in which the content information is stored by the content information storage step.

52. A content information reception program for causing a computer to execute following steps:
a content information storage step of storing content information,
a rights information storage step of storing the rights information determining restriction of acceptance of the content information,
an acceptance processing step of generating acceptance processing information regarding acceptance of the content information based on the rights information stored by the rights information storage step, and
a receiving step of receiving the content information based on the acceptance processing information generated by the acceptance processing step in order to store the content information in the content information storage step.
